# EUROPÄISCHE PATENTSCHRIFT

(11) **EP 4 493 405 B1**
(45) Veröffentlichungstag und Bekanntmachung des Hinweises auf die Patenterteilung: **25.02.2026**
(21) Anmeldenummer: 23709234.1
(22) Anmeldetag: 09.03.2023
(51) Int. Cl.: B32B 27/06, B32B 27/12, B32B 27/30, B32B 27/36, C08L 55/02, C08L 69/00, B32B 21/08, B32B 27/10, F21S 2/00, F21V 33/00

(54) **DURCHLEUCHTBARER MEHRSCHICHTKÖRPER MIT THERMO- ODER DRUCKEMPFINDLICHER DEKORATIONSSCHICHT**
TRANSPARENT MULTILAYER BODY WITH THERMAL OR PRESSURE-SENSITIVE DECORATIVE LAYER
CORPS MULTICOUCHE TRANSLUCIDE POURVU DE COUCHE DÉCORATIVE SENSIBLE É LA TEMPÉRATURE OU É LA PRESSION

(30) Priorität: 16.03.2022 EP 22162419
(43) Veröffentlichungstag der Anmeldung: 22.01.2025
(73) Patentinhaber: Covestro Deutschland AG, 51373 Leverkusen (DE)
(72) Erfinder: SEIDEL, Andreas, 41542 Dormagen (DE); PIERMATTEO, Ciro, 51369 Leverkusen (DE); THUST, Torsten, 42929 Wermelskirchen (DE)
(74) Vertreter: Levpat
(86) Internationale Anmeldenummer: PCT/EP2023/055958
(87) Internationale Veröffentlichungsnummer: WO 2023/174782

(56) Entgegenhaltungen:
- WO-A1-2019/170569
- WO-A1-2021/063718

## Beschreibung

Die vorliegende Erfindung betrifft einen Mehrschichtkörper umfassend eine Trägerschicht aus einer thermoplastischen Polycarbonat-Formmasse und eine thermo- oder druckempfindliche Dekorationsschicht, eine Beleuchtungs- oder Anzeigeeinheit umfassend den Mehrschichtkörper und eine Lichtquelle, ein Verfahren zur Herstellung des Mehrschichtkörpers sowie die Verwendung einer thermoplastischen Polycarbonat-Formmasse als Trägerschicht eines solchen Mehrschichtkörpers.

Im Automobilinnenraum wie auch in Automobilkarosserieanwendungen kommen vermehrt dekorative ambiente Beleuchtungselemente bzw. hinterleuchtete Funktions-/Displayelemente zum Einsatz. Ein Markttrend besteht darin, die Beleuchtung bzw. die Darstellung von Funktion nur bei Bedarf einzuschalten/einzublenden, z.B. um eine Tag-Nacht-Differenzierung des Erscheinungsbildes solcher Elemente zu realisieren oder um durch eine solche ambiente dynamische Beleuchtung die Raumwahmehmung im Automobilinnenraum zu intensivieren bzw. die Abbildung von Informationen bedarfs- und situationsgerecht zu ermöglichen.

Bei diesen Beleuchtungs- oder Funktionselementen handelt es sich beispielsweise um vollständig oder partiell durchleuchtbare Zierleisten, Zierblenden, Verkleidungspaneele, Lenkradabdeckungen, Konsolen, Griffe oder Instrumententafelträger bzw. um Bedienelemente, mit denen verschiedene Funktionen des Fahrzeugs bedient werden können, wie beispielsweise Start/Stopp-Knöpfe sowie Bedienelemente für die Fahrzeugbeleuchtung oder Klimaregulierung oder um Anzeigeelemente, mit denen Informationen bei Bedarf angezeigt werden können.

Derartige Bauteile bzw. Bauelemente werden im Allgemeinen aus technischen Thermoplasten hergestellt, da diese in großtechnisch einfach und kostengünstig darzustellenden Umformungsverfahren, insbesondere dem Spritzguss, eine hohe Bauteilindividualität und Funktionsintegration erlauben.

Es besteht bei solchen Bauelementen mit dekorativer Funktion oft der Wunsch, die Sichtoberfläche mit einer dekorativen Schicht zu versehen, mit dem Ziel, ihre Optik, Haptik und/oder Beständigkeit gegenüber Umwelteinflüssen, beispielsweise die Licht-, UV- oder Wärmebeständigkeit der Oberflächenoptik, die Chemikalienbeständigkeit oder Kratzfestigkeit, den technischen Anforderungsprofilen an solche Bauteile bzw. dem Kundenwunsch nach hochwertiger und differenzierter Bauteilanmutung anzupassen. Dieses kann beispielsweise und bevorzugt in einem Inmould-Dekorationsverfahren (IMD) im Spritzguss erfolgen, indem in die Spritzgussform die dekorative Schicht eingebracht und nachfolgend mit einer thermoplastischen Formmasse hinterspritzt wird. Speziell Oberflächen mit der Anmutung eines Naturmaterials (beispielsweise Holz, Stein oder Leder) oder eines Textils sind in diesem Zusammenhang sehr gefragt - insbesondere im Bereich der Oberklassefahrzeuge. Derartige Bauteile können hergestellt werden, indem in einem IMD-Prozess Schichten aus Stein, Tierhautprodukten, Textilgeweben enthaltend oder bestehend aus synthetischen Fasern, Materialien pflanzlichen Ursprungs oder enthaltend Bestandteile pflanzlichen Ursprungs, wie beispielsweise Holz, Kork, Seide, naturfaserhaltige Textile oder Papier oder Laminate enthaltend eines oder mehrere der genannten Materialien verwendet werden.

Wenn diese Schichten hinreichend dünn ausgeführt werden, lassen sie sich von Licht im sichtbaren Wellenlängenbereich (von 380 bis 780 nm) mit guter Lichtausbeute von einer Lichtquelle, beispielsweise einer LED, durchleuchten. Dadurch wird bei den Mehrschichtbauteilen, sofern auch die Trägerschicht aus der thermoplastischen Formmasse eine hinreichende Lichttransmission im sichtbaren Wellenbereich aufweist, eine Tag-/Nacht-Differenzierung der Oberflächenanmutung möglich. Im Tagmodus weisen diese Bauteile die Anmutung der dekorativen Schicht, d.h. beispielsweise des Naturmaterials oder Textils auf. Im Nachtmodus können die von einer Lichtquelle durchleuchteten Bauteile als diffuses Beleuchtungselement zur Realisierung außergewöhnlicher ambienter Beleuchtungsszenarien verwendet werden. Sofem die dekorative Schicht rückseitig partiell mit einer für Licht intransparenten Schicht überzogen wird und/oder die dekorative Schicht selbst lichtundurchlässig ist, aber in Teilbereichen mit Durchbrüchen in Form von beispielsweise Formen, Linien, Zeichen oder Symbolen versehen wird, erlauben derartige Bauteile darüber hinaus die Darstellung von Mustern oder Informationen bzw. die selektive Beleuchtung spezieller Funktionselement- bzw. Funktionsbereiche im Mehrschichtbauteil nach Bedarf.

Allerdings sind derartige dekorative Schichten aus den oben beschriebenen Materialien, insbesondere wenn sie derartig dünn ausgestaltet sind, dass sie durchleuchtbar sind, oft thermo-, d.h. temperatur- und/oder druckempfindlich. Kommen im IMD-Prozess bei der Herstellung des Mehrschichtbauteils zu hohe Temperaturen oder Drücke zum Einsatz, führt dieses daher oft zu hohem Bauteilausschuss aufgrund von thermischen Verbrennungen auf der dekorativen Schicht, welche beispielsweise in Form von Farbveränderungen, die mindestens auf der dem Thermoplast zugewandten Seite des im IMD-Prozess hergestellten Mehrschichtkörpers und bei dessen Durchleuchtung, insbesondere im Bereich der Angusspunkte, sichtbar werden.

Oder es kommt zu Ausschuss aufgrund von Verformungen der dekorativen Schicht, welche beispielsweise zu lokaler Verbund-Enthaftung, Blasenbildung bzw. Orangenhautbildung bei der dekorativen Schicht führen und/oder aufgrund von mechanischer Verletzung der dekorativen Schicht, welche insbesondere bei spröden Materialien, wie beispielsweise Stein, zu Rissen, Ausbrüchen oder im schlimmsten Fall zur kompletten Zerstörung (Bersten, Platzen, Zersplittern) der dekorativen Schicht führen.

Mehrschichtbauteile mit thermo- oder druckempfindlicher Dekorationsschicht sowie Verfahren zu deren Herstellung sind grundsätzlich bekannt.

DE 102018127648 (B3) offenbart ein Verfahren zur Herstellung eines Formteils, insbesondere eines als Formteil ausgebildeten Dekorteils und/oder Verkleidungsteils für einen Fahrzeuginnenraum mit optisch hochwertigem Dekor und ansprechender Haptik, wobei das Formteil ein als Dekorschicht ausgebildetes Holzfurnier und einen Träger umfasst. Das erfindungsgemäße Verfahren umfasst das Hinterspritzen eines zur Bildung der Dekorschicht vorgesehenen Holzfurniers mit einem Trägermaterial, insbesondere mit einem Kunststoff, bevorzugt einem ABS (Acrylnitril-Butadien-Styrol-Copolymere)-Kunststoff, zur Bildung des Trägers.

EP 2301736 A1 offenbart ein mehrschichtiges Kunststoffverbundbauteil, insbesondere für die Verwendung als dekorative Applikation oder Zierblende im automobilen Einsatzbereich, sowie ein Verfahren zu dessen Herstellung umfassend die Hinterspritzung, bevorzugt bei einem niedrigen Druck, einer dekorativen Schicht beispielsweise eines Holzfurniers, eines Laminats, eines Textils oder Papiersubstrats.

DE 19910241A1 offenbart eine Anzeigeeinheit, insbesondere für ein Fahrzeug, mit einer Anzeigenfront, welche mit Zeichen ausgestattet ist, die einen transparenten Abschnitt und einen von dem transparenten Abschnitt eingeschlossenen und im wesentlichen lichtundurchlässigen Abschnitt aufweisen und die zur Beleuchtung im Durchlichtverfahren eine hinter der Anzeigenfront angeordnete Lichtquelle hat, wobei der im wesentlichen transparente Abschnitt durch eine Durchbrechung der Anzeigenfront gebildet und der im wesentlichen lichtundurchlässige Abschnitt an einem transparenten Träger angeordnet ist. Die Anzeigefront wird aus einem lichtundurchlässigen Material, wie beispielsweise Holz, Stoffe, Gewebe, Furniere oder auch einer dünnen Folie hergestellt.

WO 2017009152A1 offenbart einen mit Holzfurnier beschichteten Kunststoffformkörper enthaltend einen Grundkörper aus Faserverbundkunststoff und ein Holzfurnier, welches wenigstens einen Oberflächenbereich des Kunststoffformkörpers bildet oder bedeckt sowie ein Verfahren zur Herstellung eines solchen Kunststoffformkörpers, wobei man den Grundkörper aus einem Faserverbundkunststoff auf eine Temperatur aufheizt, die um bevorzugt 10°C bis 50°C höher ist als ein Schmelzpunkt oder eine Glasübergangstemperatur der Kunststoffmatrix des Grundkörpers und dadurch wenigstens einen Bereich des Grundkörpers mit dem Holzfurnier thermisch miteinander verbindet.

DE 102008028608A1 offenbart ein Verfahren zum Herstellen eines Bauteils mit einem Oberflächendekor, bei dem das Oberflächendekor ein Steindekor aufweisend auf einem Trägerbauteil aus Kunststoff gebildet wird, indem das Steindekor mit einem Kunststoffmaterial wie Acrylnitril-Butadien-Styrol-Terpolymer (ABS), Polycarbonat (PC), Blends aus Polycarbonat und Acrylnitril-Butadien-Styrol-Terpolymer (PC/ABS), Polymethylmethacrylat (PMMA), Polystyrol (PS) oder Polyurethan (PUR) hinterspritzt, hinterpresst oder hinterblasen wird. Eine bevorzugte Weiterbildung der Erfindung sieht eine zumindest abschnittsweise lichttransparente Ausführung im Bereich des Steindekors vor.

DE 19909869C2 offenbart ein Verfahren zum Herstellen eines Verkleidungsteils, bei dem eine dünne Zierschicht auf ein Trägerelement mittels eines Klebematerials aufgebracht wird, wobei die dünne Zierschicht aus einem organischen und/oder kristallinen, in dünner Schicht bruchgefährdeten Material, insbesondere aus Naturstein besteht.

WO 2021063718 A1 offenbart eine LED-Beleuchtungseinheit umfassend einen Mehrschichtkörper und eine LED-Lichtquelle, wobei der Mehrschichtkörper aus den folgenden Schichten in dieser Reihenfolge besteht: a1) einer Trägerschicht aus einer thermoplastischen Zusammensetzung, a2) einer Natursteinschicht, a3) einer transparenten Schicht aus einer thermoplastischen Zusammensetzung. Als für die Ausbildung der Schichten a1) und/oder a3) geeignete thermoplastische Zusammensetzung werden Polycarbonatbasierende Zusammensetzungen offenbart.

EP 1144177B1 offenbart ein Verfahren zum Herstellen eines Verbundformteils, bei dem ein flexibles Obermaterial, insbesondere ein Dekormaterial wie Stoff, Leder, Folie oder dergleichen, innerhalb einer Kavität, die zwischen einer Matrizenformplatte und einem Formkern ausgebildet ist, mit Kunststoff bei möglichst geringem Druck hinterspritzt wird. Beim Hinterspritzen muss darauf geachtet werden, dass die oft empfindlichen Obermaterialien nicht beschädigt werden.

Für einen ansprechenden optischen Eindruck des Mehrschichtkörpers im durchleuchteten Zustand ist es zudem wünschenswert, dass der Kunststoffgrundträger das Licht einer punktförmigen Lichtquelle, beispielsweise einer LED, zumindest in einem gewissen Maße streut und damit ein diffuses Beleuchtungsbild des durchleuchteten Bauteils realisiert wird. Andernfalls wäre die Lichtquelle für den Betrachter sichtbar und/oder der gewünscht visuelle Effekt beim Einschalten der Lichtquelle nur auf einen kleinen Bereich des Mehrschichtkörpers begrenzt. In manchen Fällen sind Angussstellen für den Spritzgussprozess insbesondere bei dünnwandigen, großflächigen und/oder geometrisch komplexen Bauteilen im Sichtbereich des Mehrschichtkörpers auf derjenigen Seite des Kunststoffgrundträgers unvermeidbar angeordnet, die der mit der Dekorationsschicht versehenen Sichtseite des Mehrschichtkörpers abgewandt ist. Dann führt eine unzureichende Lichtdiffusivität des Kunststoffträgers bei Durchleuchtung des Mehrschichtkörpers auf seiner Sichtseite in unerwünschter Art und Weise dazu, dass diese Angussstellen sichtbar werden und das hochwertige Erscheinungsbild des Beleuchtungskörpers somit stören. Zur Erzielung eines insofern gewünschten diffusen Lichteindrucks einer von einer punktförmigen Lichtquelle durchstrahlten Fläche des Mehrschichtkörpers ist es erforderlich, dass die Trägerschicht einerseits eine möglichst hohe Transmission des eingestrahlten sichtbaren Lichts und andererseits eine möglichst hohe, durch Lichtstreuung bedingte Lichtdiffusivität, d.h. einen möglichst großen Halbwertswinkel des durch eine punktförmige Lichtquelle nach Durchtritt durch die Trägerschicht resultierenden Lichtkegels aufweist. Je größer dieser Halbwertswinkel ist, desto räumlich homogener ist die wahrgenommene Beleuchtungsintensität des von einer punktförmigen Lichtquelle ausgehenden Lichts nach Durchtritt durch die Trägerschicht und desto weniger werden Angussstellen oder andersartige visuelle Defekte, die auf der der Sichtseite abgewandten Seite des Kunststoffgrundträgers im Spritzgussprozess resultieren, beim Durchleuchten auf der Sichtseite des durchleuchteten Mehrschichtkörpers störend sichtbar. Bei großen Lichtdiffusions-Halbwertswinkeln der Trägerschicht können somit auch größere Flächen durch punktförmige Lichtquellen mit räumlich weitgehend homogener Lichtintensität durchstrahlt werden. Im Allgemeinen sind Transmission und Lichtdiffusivität (Halbwertswinkel) eines Materials nicht unabhängig voneinander einstellbar und in der Regel gegenläufig zueinander. Eine Optimierung der Lichtdiffusivität durch Materialmodifizierung, beispielsweise durch Änderung seiner Zusammensetzung, resultiert somit meist in abnehmender Transmission. Beide Größen sind dabei insbesondere auch von der durchleuchteten Materialschichtdicke abhängig, wobei mit zunehmender Schichtdicke die Transmission ab- und die Lichtdiffusivität eines transluzenten Materials zunimmt.

An solche Bauteile bzw. Bauelemente für den Innen- und Außen-Einsatz im Automobil werden weitere anwendungstechnische Anforderungen, wie beispielsweise insbesondere auch bei tiefen Temperaturen hohe Materialduktilität, hohe Wärmeformbeständigkeit und Maßhaltigkeit gestellt. Für solche Anwendungen in Frage kommende und deshalb in derartigen Einsatzfeldern etablierte Thermoplaste wie Polycarbonat, Acrylnitril-Butadien-Styrol-Terpolymere (ABS) und Blends aus diesen beiden Thermoplasten weisen entweder eine zu hohe Schmelzeviskosiät auf und erfordern deshalb hohe Schmelzetemperaturen und/oder hohe Einspritzdrücke im Spritzgussprozess, insbesondere bei der Herstellung komplexer, großflächiger und/oder dünner Trägerschichten. Das führt bei Verwendung thermo- und/oder druckempfindlicher dekorativer Schichten zu den oben beschriebenen Problemen (hohe Ausschussraten im Produktionsprozess). Oder die Thermoplaste weisen unzureichende mechanische Eigenschaften und/oder Lichtdiffusivität auf. Dieses trifft insbesondere auf transparentes Polycarbonat oder mit Streuadditiven versehene Polycarbonat-Compounds zu. Weiterhin weisen in derartigen Anwendungen im Stand der Technik im Einsatz befindliche ABS-Kunststoffe, ABS/PC- bzw. PC/ABS-Blends, welche sich grundsätzlich aufgrund ihrer gegenüber Polycarbonat geringeren Schmelzeviskosität bei geringeren Schmelzetemperaturen bzw. Einspritzdrücken im Spritzguss verarbeiten lassen und im Allgemeinen eine hohe Lichtdiffusivität aufweisen, aber unzureichende Lichttransmission auf, d.h. ihr Einsatz zur Herstellung der Mehrschichtbauteile führt bei Hinterleuchtung zu einer unzureichenden Lichtausbeute auf der Sichtseite des Bauteils.

Es war daher wünschenswert, einen diffus mit verbesserter Lichtausbeute durchleuchtbaren Mehrschichtkörper mit im nicht durchleuchteten und/oder im durchleuchteten Zustand verbesserten ästhetischen Erscheinungsbild bereitzustellen, enthaltend einen Grundträger aus einem thermoplastisch verarbeitbaren Material und eine thermo- und/oder druckempfindliche dekorative Schicht ausgewählt aus der Gruppe bestehend aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien. Dabei soll das thermoplastisch verarbeitbare Material die allgemeinen anwendungstechnischen Anforderungen erfüllen, die von der Automobilindustrie an Materialien zur Herstellung von Bauteilen für den Einsatz im Innen- und Außenbereich gestellt werden und sich bei niedrigen Schmelzetemperaturen und Einspritzdrücken in einem IMD-Prozess verarbeiten lassen, wodurch die Qualität der Mehrschichtkörper verbessert bzw. Ausschussraten im Produktionsverfahren reduziert werden. Weiterhin war es wünschenswert, ein Verfahren zur Herstellung eines solchen Mehrschichtkörpers bereitzustellen, in dem die dekorative Schicht über ein IMD-Verfahren auf den Träger aus thermoplastischer Formmasse aufgebracht wird.

Dafür war es erforderlich, dass das Trägermaterial einerseits eine Kombination aus verbesserter Transmission für Licht im sichtbaren Wellenlängenbereich und hoher Lichtdiffusivität (d.h. einen großen Halbwertswinkel) sowie ein gutes thermoplastisches Verarbeitungsverhalten (d.h. geringe Schmelzeviskosität bzw. hohe Schmelzefließfähigkeit) und darüber hinaus hohe Materialduktilität insbesondere auch bei tiefen Temperaturen sowie eine hohe Wärmeformbeständigkeit aufweist.

Überraschendweise wurde gefunden, dass ein Mehrschichtkörper, umfassend
(I) eine Trägerschicht aus einer thermoplastischen Formmasse enthaltend
   A) mindestens einen Vertreter ausgewählt aus der Gruppe bestehend aus aromatischem Polycarbonat und aromatischem Polyestercarbonat,
   B) kautschukmodifiziertes Vinyl(co)polymerisat aus
      B.1) 80 bis 95 Gew.-%, bezogen auf das kautschukmodifizierte Vinyl(co)polymerisat B, Struktureinheiten abgeleitet von wenigstens einem Vinylmonomeren und
      B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, ermittelt durch dynamische Differenzkalorimetrie nach DIN EN 61006 in der Version von 1994 bei einer Heizrate von 10 K/min mit Bestimmung der Glasübergangstemperatur als Mittelpunkttemperatur, enthaltend mindestens 50 Gew.-%, bezogen auf B.2, an vom 1,3-Butadien abgeleiteten Struktureinheiten, wobei das kautschukmodifizierte Vinyl(co)polymerisat B
         (i) eine disperse Phase bestehend aus
            (i.1) mit Vinyl(co)polymerisat aus Struktureinheiten gemäß B.1 gepfropften Kautschukpartikeln und
            (i.2) in den Kautschukpartikeln als separierte disperse Phase eingeschlossenes Vinyl(co)polymerisat ebenfalls aus Struktureinheiten gemäß B.1 und
         (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
      enthält,
      wobei die disperse Phase gemäß (i) einen mittleren Durchmesser D50 gemessen per Ultrazentrifugation von 0,7 bis 2,0 µm aufweist,
   C) optional mindestens eine weitere Komponente ausgewählt aus Polymeradditiven und polymeren Blendpartnern,

   wobei die thermoplastische Formmasse weniger als 2 Gew.-% an von Komponente B) verschiedenen, kautschukbasierten Pfropfpolymeren enthält und
   wobei die thermoplastische Formmasse einen Kautschukgehalt von mindestens 1,5 Gew.-% aufweist, und
(II) eine Schicht aus einem Material ausgewählt aus der Gruppe bestehend aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,

wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 %, bevorzugt von mindestens 40 % und am meisten bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird
   oder
wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II) mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind,
die genannte Aufgabe löst.

Für den Fall, dass die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 %, bevorzugt von mindestens 40 % und am meisten bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird, kann die Schicht optional mindestens eine Aussparung in Form von mindestens einem Symbol, einem Muster, einem Loch, einer Linie oder einem Zeichen aufweisen oder es kann sich um punktförmige Aussparungen handeln, die in Form von mindestens einem Symbol, einem Muster, einem Loch, einer Linie oder einem Zeichen angeordnet sind.

In bevorzugter Ausführungsform enthält die thermoplastische Formmasse der Trägerschicht (I)
30 bis 85 Gew.-%, weiter bevorzugt 50 bis 82 Gew.-%, noch weiter bevorzugt 58 bis 82 Gew.-%, am meisten bevorzugt 65 bis 75 Gew.-% der Komponente A,
14 bis 69 Gew.-%, weiter bevorzugt 17 bis 49 Gew.-%, noch weiter bevorzugt 17 bis 41 Gew.-%, am meisten bevorzugt 24 bis 34 Gew.-% der Komponente B,
0,05 bis 20 Gew.-%, weiter bevorzugt 0,1 bis 10 Gew.-%, noch weiter bevorzugt 0,2 bis 5 Gew.-%, am meisten bevorzugt 0,3 bis 2 Gew.-% der Komponente C.

In bevorzugter Ausführungsform enthält die Formmasse der Trägerschicht (I) weniger als 1 Gew.-%, weiter bevorzugt weniger als 0,5 Gew.-%, noch weiter bevorzugt weniger als 0,2 Gew.-% an von Komponente B) verschiedenen, kautschukbasierten Pfropfpolymeren. Am meisten bevorzugt enthält die Formmasse keinerlei von Komponente B) verschiedene, kautschukbasierte Pfropfpolymere.

In bevorzugter Ausführungsform weist die Formmasse der Trägerschicht (I) einen Kautschukgehalt im Bereich von 1,5 bis 6 Gew.-%, weiter bevorzugt im Bereich 1,8 bis 5 Gew.-%, noch weiter bevorzugt im Bereich 1,9 bis 4,1 Gew.-%, am meisten bevorzugt im Bereich 2,5 bis 3,5 Gew.-% auf.

Die zuvor genannten Vorzugsbereiche der Komponenten A und B sowie der Komponente C können beliebig miteinander kombiniert werden.

Die Trägerschicht (I) besteht in bevorzugter Ausführungsform aus einer thermoplastischen Formmasse, welche zu mindestens 80 Gew.-%, weiter bevorzugt zu mindestens 95 Gew.-%, stärker bevorzugt zu mindestens 99 Gew.-% am stärksten bevorzugt zu 100 Gew.-% aus den Komponenten A, B und C besteht.

Die Trägerschicht (I) wird im Rahmen der vorliegenden Erfindung auch als Kunststoffträger oder Träger bezeichnet.

Der Mehrschichtkörper ist dazu geeignet mittels einer Lichtquelle mit sichtbarem Licht (von 380 bis 780 nm) durchleuchtet zu werden, das heißt der Mehrschichtkörper ist durchleuchtbar. Die Lichtquelle ist so angeordnet, dass das Licht zunächst auf das Trägermaterial (I) trifft und durch die Schicht (II) oder, insbesondere immer dann, wenn es sich bei Schicht (II) um eine für sichtbares Licht undurchlässige oder unzureichend durchlässige Schicht handelt, durch Aussparungen, die in die Schicht (II) eingebracht sind, austritt. Bevorzugt handelt es sich bei der Lichtquelle um eine LED Lichtquelle.

Durchleuchtbar bedeutet, dass sich beim Einschalten der Lichtquelle der visuelle Eindruck auf der der Lichtquelle abgewandten Seite, d.h. der Sichtseite des Bauteils oder Bauelements im Einbauzustand ändert.

In bevorzugter Ausführungsform weist der Mehrschichtkörper mindestens in Teilbereichen in seiner tatsächlichen dortigen Dicke bei mindestens einer Wellenlänge im Wellenlängenbereich des Spektrums von 380 bis 780 nm einen Transmissionsgrad von mindestens 10 % , weiter bevorzugt mindestens 25% noch weiter bevorzugt mindestens 40 % und am meisten bevorzugt von mindestens 45 % auf, wobei der Transmissionsgrad aus dem Transmissionsspektrum ermittelt wird, welches gemäß der Vorgaben in der DIN/ISO 13468-2 in der Version von 2006 gemessen wird.

Ein weiterer Gegenstand der Erfindung ist die Verwendung einer Formmasse wie zuvor beschrieben als Trägerschicht (I) in einem wie oben beschriebenen Mehrschichtkörper.

Ein weiterer Gegenstand der Erfindung ist eine Beleuchtungs- oder Anzeigeeinheit umfassend einen Mehrschichtkörper wie oben beschrieben und eine Lichtquelle, welche Licht mit mindestens einer Wellenlänge im Wellenlängenbereich des Spektrums von 380 bis 780 nm ausstrahlt, wobei die Lichtquelle so angeordnet ist, dass die Trägerschicht (I) des Mehrschichtkörpers von dem von der Lichtquelle abgestrahlten Licht durchstrahlt wird.

Ein weiterer Gegenstand der Erfindung ist ein Verfahrens zur Herstellung eines durchleuchtbaren Mehrschichtkörpers, umfassend die Schritte
a) Herstellung einer Schicht aus einem Material ausgewählt aus der Gruppe bestehend aus Stein, Tierhautprodukt Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,
   wobei die Schicht mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 %, bevorzugt von mindestens 40 % und am meisten bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird
      oder
   wobei die Schicht im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II) mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind,
b) optional Thermoformen der in Schritt a) hergestellten Schicht,
c) Hinterspritzen der Schicht mit einer wie oben beschriebenen thermoplastischen Formmasse.

### Zusammensetzung der Trägerschicht (I)

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934). Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 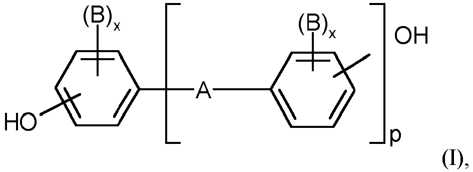 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 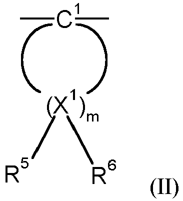 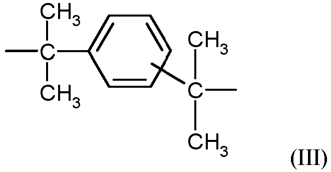
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel M_{w}) von bevorzugt 20000 bis 40000 g/mol, weiter bevorzugt 24000 bis 32000 g/mol, besonders bevorzugt 26000 bis 30000 g/mol, gemessen durch GPC (Gelpermeationschromatographie) kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Esterals auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bevorzugt wird als Komponente A lineares Polycarbonat auf Basis von ausschließlich Bisphenol A eingesetzt.

### Komponente B

Bei Komponente B handelt es sich um kautschukmodifizierte Vinyl(co)polymerisate aus
B.1) 80 bis 95 Gew.-%, bevorzugt 83 bis 93 Gew.-%, weiter bevorzugt 85 bis 92 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bevorzugt 7 bis 17 Gew.-%, weiter bevorzugt 8 bis 15 Gew.-%, bezogen auf das kautschukmodifizierte Vinyl(co)polymerisat B, einer oder mehrerer kautschukelastischer Pfropfgrundlagen mit Glasübergangstemperaturen T_{g} < -50°C, bevorzugt von < -60°C, besonders bevorzugt < -70°C enthaltend mindestens 50 Gew.-%, bevorzugt mindestens 70 Gew.-%, besonders bevorzugt 100 Gew.-%, bezogen auf B.2, an vom 1,3-Butadien abgeleiteten Struktureinheiten,
   wobei das kautschukmodifizierte Vinyl(co)polymerisat B
   (i) eine disperse Phase bestehend aus
      (i.1) mit Vinyl(co)polymerisat aus Struktureinheiten gemäß B.1 gepfropften Kautschukpartikeln und
      (i.2) in den Kautschukpartikeln als separierte disperse Phase eingeschlossenes Vinyl(co)polymerisat ebenfalls aus Struktureinheiten gemäß B.1
      und
   (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
   enthält,
und wobei die disperse Phase gemäß (i) einen mittleren Durchmesser D50 gemessen per Ultrazentrifugation von 0,7 bis 2,0 µm, bevorzugt von 0,7 bis 1,5 µm, insbesondere von 0,7 bis 1,2 aufweist.

Die Glasübergangstemperatur T_{g} wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die kautschukmodifizierten Vinyl(co)polymerisate gemäß Komponente B weisen eine Schmelzeflussrate (MVR), gemessen gemäß ISO 1133 (Version von 2012) bei 220°C mit einer Stempellast von 10 kg, von bevorzugt 2 bis 20 ml/10min, besonders bevorzugt 3 bis 15 ml/10min, insbesondere 4 bis 8 ml/10min auf. Kommen Mischungen aus mehreren kautschukmodifizierten Vinyl(co)polymerisaten als Komponente B zum Einsatz, so gelten die bevorzugten MVR-Bereiche für den Mittelwert des über die Massenanteile der Komponenten in der Mischung gewichteten MVRs der Einzelkomponenten.

Derartige kautschukmodifizierte Vinyl(co)polymerisate B werden beispielsweise hergestellt durch radikalische Polymerisation, bevorzugt im Masse-Polymerisationsverfahren, von

| | |
|---|---|
| B.1 | 80 bis 95 Gew.-%, bevorzugt 83 bis 93 Gew.-%, besonders bevorzugt 85 bis 92 Gew.-%, bezogen auf das kautschukmodifizierte Vinyl(co)polymerisat B, wenigstens eines Vinylmonomeren in Anwesenheit von |
| B. 2 | 5 bis 20 Gew.-%, bevorzugt 7 bis 17 Gew.-%, besonders bevorzugt 8 bis 15 Gew.-%, bezogen auf das kautschukmodifizierte Vinyl(co)polymerisat B, einer oder mehrerer kautschukelastischer Pfropfgrundlagen mit Glasübergangstemperaturen < -50°C, bevorzugt < -60°C, besonders bevorzugt < -70°C, enthaltend mindestens 50 Gew.-%, bevorzugt mindestens 70 Gew.-%, besonders bevorzugt 100 Gew.-% bezogen auf B.2, an vom 1,3-Butadien abgeleiteten Struktureinheiten. |

Bei dem zur Herstellung des kautschukmodifizierten Vinyl(co)polymerisats B bevorzugt angewandten Masse-Polymerisationsverfahren erfolgt sowohl die Polymerisation der Vinylmonomeren gemäß B.1 als auch eine Pfropfung des so entstehenden Vinyl(co)polymers auf die kautschukelastische Pfropfgrundlage gemäß B.2. Des Weiteren erfolgt bei dieser Reaktionsführung durch Selbstorganisation (Phasenseparation) die Ausbildung einer dispersen Phase (i) bestehend aus
(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1,
wobei diese kautschukhaltige Phase (i) in einer nicht an die Kautschukpartikel gebundene und nicht in diese Kautschukpartikel eingeschlossene kautschukfreie Vinyl(co)polymerisat-Matrix (ii) bestehend aus Struktureinheiten gemäß B.1 dispergiert vorliegt.

Das kautschukfreie Vinyl(co)polymerisat (ii) lässt sich im Gegensatz zu den anderen Vinyl(co)polymerisat-Anteilen in der Komponente B durch geeignete Lösungsmittel wie beispielsweise Aceton herauslösen.

Die Größe der dispersen Phase (i) in den so hergestellten kautschukmodifizierten Vinyl(co)polymerisaten B wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-796) bestimmt.

Die Monomere B.1 sind vorzugsweise Gemische bestehend aus

| | |
|---|---|
| B.1.1 | 60 bis 85 Gew.-Teilen, besonders bevorzugt 65 bis 80 Gew.-Teilen, weiter bevorzugt 70 bis 78 Gew.-Teilen, jeweils bezogen auf die Summe aus B.1.1 und B.1.2, Styrol und |
| B.1.2 | 15 bis 40 Gew.-Teilen, besonders bevorzugt 20 bis 35 Gew.-Teilen, weiter bevorzugt 22 bis 30 Gew.-Teilen, jeweils bezogen auf die Summe aus B.1.1 und B.1.2, Acrylnitril |

sowie optional B.1.3 0-10 Gew.-Teilen, bevorzugt 0-7 Gew.-Teilen, weiter bevorzugt 0-5 Gew.-Teilen Methylmethacrylat oder n-Butylacrylat, jeweils bezogen auf 100 Gew.-Teile als Summe von B.1.1 und B.1.2.

In einer weiteren bevorzugten Ausführungsform handelt es sich bei den Monomeren B.1 um ein Gemisch aus 22 bis 26 Gew.-Teilen Acrylnitril und 74 bis 78 Gew.-Teilen Styrol, welches optional bis zu 10 Gew.-Teilen, besonders bevorzugt bis zu 5 Gew.-Teilen an n-Butylacrylat oder Methylmethacrylat enthalten kann, wobei die Summe der Gewichtteile an Styrol und Acrylnitril 100 Gew.-Teile ergeben.

Besonders bevorzugt ist B.1 frei von B.1.3, wobei bezüglich B.1.1 und B.1.2 die oben genannten bevorzugten Bereiche gelten.

Bevorzugte Pfropfgrundlagen B.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß B.1.1 und B.1.2).

Besonders bevorzugt als Pfropfgrundlage B.2 ist reiner Polybutadienkautschuk. In einer weiteren bevorzugten Ausführungsform handelt es sich bei B.2 um Styrol-Butadien-Blockcopolymer-Kautschuk.

Die Komponente B weist bevorzugt einen Polybutadiengehalt von 5 bis 18 Gew.-%, weiter bevorzugt von 7 bis 15 Gew.-%, insbesondere von 8 bis 13 Gew.-% auf.

Besonders bevorzugte kautschukmodifizierte Vinyl(co)polymerisate gemäß Komponente B sind Masse-ABS-Polymerisate wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Das nicht an die Kautschukgrundlage(n) B.2 chemisch gebundene und nicht in den Kautschukpartikeln eingeschlossene Vinyl(co)polymerisat (ii) kann wie zuvor dargestellt herstellungsbedingt bei der Polymerisation der Pfropfpolymerisate B entstehen. Ebenso ist es möglich, dass ein Teil dieses nicht an die Kautschukgrundlage(n) B.2 chemisch gebundene und nicht in den Kautschukpartikeln eingeschlossene Vinyl(co)polymerisats (ii) im kautschukmodifizierten Vinyl(co)polymerisat gemäß Komponente B herstellungsbedingt bei dessen Herstellung im Masse-Polymerisationsverfahren entsteht und ein anderer Teil separat polymerisiert und der Komponente B als Bestandteil der Komponente B zugesetzt wird. Der Anteil des Vinyl(co)polymerisats (ii), unabhängig von dessen Ursprung, gemessen als in Aceton löslicher Anteil, beträgt in der Komponente B, bezogen auf die Komponente B, bevorzugt mindestens 50 Gew.-%, besonders bevorzugt mindestens 60 Gew-%, weiter bevorzugt mindestens 70 Gew.-%.

Dieses Vinyl(co)polymerisat (ii) weist in den kautschukmodifizierten Vinyl(co)polymerisaten gemäß Komponente B ein gewichtgemitteltes Molekulargewicht M_{w} von 70 bis 250 kg/mol, bevorzugt von 130 bis 200 kg/mol, insbesondere von 150 bis 180 kg/mol auf.

Das gewichtsgemittelte Molekulargewicht M_{w} des Vinyl(co)polymerisats (ii) in Komponente B wird im Rahmen der vorliegenden Erfindung per Gelpermeationschromatographie (GPC) in Tetrahydrofuran gegen Polystyrol als Standard gemessen.

Die Komponente B ist bevorzugt frei von Alkali-, Erdalkali-, Ammonium- oder PhosphoniumSalzen von gesättigten Fettsäuren mit 8 bis 22 Kohlenstoffatomen, Harzsäuren, Alkyl- und Alkylarylsulfonsäuren und Fettalkoholsulfaten.

Die Komponente B enthält bevorzugt weniger als 100 ppm, besonders bevorzugt weniger als 50 ppm, ganz besonders bevorzugt weniger als 20 ppm Ionen von Alkalimetallen und Erdalkalimetallen.

Als Komponente B geeignete kautschukmodifizierte Vinyl(co)polymerisate sind beispielsweise Magnum^{™} 3404, Magnum^{™} 3504 und Magnum^{™} 3904 der Firma Trinseo S.A. (Luxemburg).

### Komponente C

Als Komponente C können optional ein oder mehrere Vertreter ausgewählt aus der Gruppe bestehend aus Polymeradditiven und polymeren Blendpartnern enthalten sein.

Die Polymeradditive bzw. polymeren Blendpartner sind bevorzugt ausgewählt aus der Gruppe bestehend aus Gleit- und Entformungsmitteln, Stabilisatoren, Farbmitteln, Verträglichkeitsvermittlern, weiteren von Komponente B verschiedenen Schlagzähigkeitsmodifikatoren, weiteren von den Komponenten A und B verschiedenen polymeren Bestandteilen (beispielsweise funktionelle Blendpartner oder Pfropfpolymerisate mit Kern-Schale-Struktur hergestellt im Emulsions-Polymerisationsverfahren) sowie Füll- und Verstärkungsstoffen.

In bevorzugter Ausführungsform sind in Komponente C keine Füll- oder Verstärkungsstoffe enthalten. Weiter bevorzugt sind keine Pigmente enthalten. Weiter bevorzugt sind keine polymeren Blendpartner enthalten. Weiter bevorzugt sind keine polymeren Komponenten enthalten. In besonders bevorzugter Ausführungsform sind weder Füll- oder Verstärkungsstoffe, Pigmente noch polymere Blendpartner enthalten. Am stärksten bevorzugt sind weder Füll- oder Verstärkungsstoffe, Pigmente noch polymere Komponenten enthalten.

In bevorzugter Ausführungsform wird als Komponente C mindestens ein Polymeradditiv ausgewählt aus der Gruppe bestehend aus Gleit- und Entformungsmitteln und Stabilisatoren eingesetzt.

In bevorzugter Ausführungsform wird als Stabilisator mindestens ein Vertreter ausgewählt aus der Gruppe bestehend aus sterisch gehinderten Phenolen, organischen Phosphiten, und organischen oder anorganischen Brönstedt-Säuren eingesetzt.

Als Gleit- und Entformungsmittel werden in bevorzugter Ausführungsform Fettsäureester, besonders bevorzugt Fettsäureester des Pentaerythrits oder Glycerins, eingesetzt.

In einer besonders bevorzugten Ausführungsform wird als Komponente C mindestens ein Polymeradditiv ausgewählt aus der Gruppe bestehend aus C8-C22-Fettsäureester des Pentaerythrits, C8-C22-Fettsäureester des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl)-pentaerythritoldiphosphit und Triethylenglykol-bis[3-(3-tert-butyl-4-hydroxy-5-methylphenyl)propionat] eingesetzt.

In einer weiteren Ausführungsform enthält die Komponente C kein kautschukmodifiziertes Vinyl(co)polymerisat hergestellt durch Emulsionspolymerisation.

### Herstellung der Formmassen der Trägerschicht

Aus den erfindungsgemäßen Komponenten A, B und C werden thermoplastische Formmassen hergestellt.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C, ganz besonders bevorzugt bei 260°C bis 290°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet. Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

### Dekorative Schicht (II)

Der Mehrschichtkörper enthält als Schicht (II) eine Schicht aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien
wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 %, bevorzugt von mindestens 40 % und am meisten bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird
   oder
wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II) mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind.

Wenn der Mehrschichtkörper von der Trägerseite ausgehend mit Licht durchstrahlt wird, werden in dieser Ausführungsform die durch die Aussparungen dargestellten Formen auf der Sichtseite des Mehrschichtkörpers sichtbar.

Das in der Schicht (II) verwendete Material ist temperaturempfindlich und/oder druckempfindlich. Es ist daher vorteilhaft, wenn bei der Herstellung der Mehrschichtkörper durch Hinterspritzen der Schicht (II) mit dem Material der Trägerschicht (I) möglichst geringe Temperaturen oder Drücke angewendet werden.

Als Material pflanzlichen Ursprungs wird bevorzugt ein Naturholz, Holzfurnier, Kork, Papier, Celluloseprodukte oder Textilgewebe aus Naturfasern wie Seide, Baumwolle, Flachs oder Hanf eingesetzt.

Materialien enthaltend Bestandteile pflanzlichen Ursprungs wie zuvor beschrieben, welche sich zur Herstellung der dekorativen Schicht gemäß der vorliegenden Erfindung eignen, enthalten diese Bestandteile pflanzlichen Ursprungs in einem Anteil von bevorzugt mindestens 20 Gew.-%, besonders bevorzugt mindestens 50 Gew.-%, besonders bevorzugt mindestens 70 Gew.-%.

Spröde Materialien sind in dünner Schicht bruchgefährdet und daher druckempfindlich. Das gilt beispielsweise für Steinprodukte, wie Naturstein oder andere steinartige Werkstoffe. Im Rahmen der vorliegenden Erfindung werden alle Arten von Naturstein und steinartigen Werkstoffen allgemein als Stein oder Steinprodukt und die entsprechende Schicht als Steinschicht bezeichnet.

Bei der Steinschicht handelt es sich um eine Schicht aus einem metamorphen Gestein oder einem Sedimentgestein. Hier liegen mehrere relativ diskrete Schichten vor, welche sich von dem Natursteinmaterial als dünne Lagen abziehen lassen. Geeignete Steinmaterialien sind beispielsweise schiefrig ausgebildete Tonsteine bzw. Schieferton, Kalkstein, Sandstein, Schlammstein, Tonschiefer, Quarzit, Phyllit, Glimmerschiefer, Chloritschiefer, Gneis, Talkschiefer, Blau- bzw. Gluakophanschiefer, Buntschiefer, Prasinit, Epidot-Amphibolit, Amphibolit, Embrechit, Agmatit, Kalkschiefer, Mylonit, Argillit, Migmatit, Marmor, Serpentinit, Eklogit, Schist, Fruchtschiefer oder Granulit. Bevorzugt umfasst die Steinschicht Buntschiefer, Glimmerschiefer, Kalkstein, Sandstein oder Marmor, weiter bevorzugt besteht sie aus einem dieser Gesteine. Grundsätzlich kann die Steinschicht aus verschiedenen Steinelementen zusammengesetzt sein und beispielsweise ein Mosaik aus einer oder mehreren Steintypen darstellen. Bevorzugt besteht die Steinschicht jedoch aus einem Steintyp und ist einstückig gearbeitet.

Als steinartige Werkstoffe kommen Kompositwerkstoffe zum Einsatz enthaltend mindestens 50 Gew.-%, bevorzugt mindestens 70 Gew.-%, weiter bevorzugt mindestens 80 Gew.-% und am meisten bevorzugt mindestens 90 Gew.-% mineralische Bestandteile bzw. Bestandteile mineralischen Ursprungs und bis zu 50 Gew.-%, bevorzugt bis zu 30 Gew.-%, weiter bevorzugt bis zu 20 Gew.-%, besonders bis zu 10 Gew.-% polymere Bindemittel und/oder andere additive Bestandteile. Derartige Kompositwerkstoffe werden durch Compoundierung oder bevorzugt durch Verpressung von innigen Mischungen aus optional prozessiertem Gesteinsmehl, beispielsweise Aluminiumhydroxid (gewonnen aus Bauxit) oder Quarzmehl, und den polymeren Bindemitteln und/oder anderen additiven Bestandteilen, bevorzugt bei hohen Drücken und/oder Temperaturen hergestellt. Im Handel werden sie häufig unter der Bezeichnung Kunststein, beispielsweise unter den Handelsnamen Dekton^{®}, Corian^{®}, Himacs^{®} oder Silestone^{®} vermarket.

Unter steinartigen Werkstoffen werden im Sinne der Erfindung auch Keramiken und mineralische Gläser verstanden.

Die Dicke der Steinschicht beträgt ≤ 2 mm, bevorzugt ≤ 1 mm, weiter bevorzugt ≤ 0,5 mm, besonders bevorzugt ≤ 0,3 mm, wobei es sich um eine über die Fläche der Steinschicht gemittelte Dicke handelt.

Ein beispielhaftes geeignetes Tierhautprodukt ist Leder. Es kann sich um ein Glattleder oder Velourleder beispielsweise vom Rind, Kalb, Ziege oder Schaf handeln. Das Leder kann durch verschiedene Gerbverfahren erhalten werden und auch einer Oberflächenbehandlung unterzogen werden. Diese Maßnahmen sind dem Fachmann bekannt.

Unter Holzfumier wird ein aus wenigstens einer Holzschicht bestehendes dünnes Blatt, das durch Schälen, Messern oder Sägen von einem Holzstamm abgetrennt wird (DIN 4079) verstanden. Eine andere Möglichkeit ist das Verleimen von Schnittholz-Lamellen zu einem Block, um diesen dann zu messern.

Bevorzugt eingesetzte Holzfurniere weisen eine Stärke im Bereich von 0,1 bis 0,5 mm auf. Wobei sehr dünne Fumiere rissanfällig sind, so dass die Verarbeitung besondere Vorsicht erfordert.

Bevorzugt umfasst das wenigstens eine Holzfurnier zumindest eine Holzschicht jeglicher Holzart. Besonders bevorzugt wird ein Holzfurnier aus der Holzgruppe Ahorn, Birke, Tulpenholz, Kirschbaum, Esche, Erle, Buche, Walnuss, Eiche, Platane und Mahagoni, eingesetzt.

Die Holzschicht kann dabei naturbelassen, oder eingefärbt sein. Die Einfärbung kann vollflächig oder lediglich partiell vorliegen. Die Holzschicht kann sowohl optische als auch haptische Effekte erzeugen.

In bevorzugter Ausführungsform handelt es sich bei der Schicht (II) um eine Schicht aus einem Material ausgewählt aus der Gruppe bestehend aus Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien, weiter bevorzugt um eine Schicht aus einem Material ausgewählt aus der Gruppe bestehend aus Textilgewebe enthaltend synthetische Fasern, Material pflanzlichen Ursprungs oder enthaltend Bestandteile pflanzlichen Ursprungs oder Laminat enthaltend eines oder mehrere der genannten Materialien, besonders bevorzugt um eine Schicht aus einem Material pflanzlichen Ursprungs oder einem Laminat enthaltend ein Material pflanzlichen Ursprungs, am meisten bevorzugt um eine Schicht aus Naturholz, insbesondere um ein Naturholzfumier.

Weiterhin kann die Schicht (II) auf der der Trägerschicht abgewandten Seite bearbeitet werden durch Beizen, Fräsen, Imprägnieren, Lackieren, Aufbringen von Farbmitteln oder andere Techniken, um den Oberflächeneindruck oder die Haptik zu verändern. Die Schritte können am fertigen Mehrschichtkörper oder an der Schicht (II) vor Verbinden mit dem Trägermaterial erfolgen.

Alternativ kann in einer ersten speziellen Ausführungsform eine nur in Teilbereichen durchleuchtbare dekorative Schicht (II) auch realisiert werden, indem eine Schicht aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien, welche in ihrer tatsächlichen Dicke bei mindestens einer Wellenlänge im Wellenlängenbereich des Spektrums von 380 bis 780 nm einen Transmissionsgrad von mindestens 25 %, weiter bevorzugt von mindestens 40 % und am meisten bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird, auf ihrer der Sichtseite des Mehrschichtbauteils entgegengewandten Seite, d.h. der Seite, die dem Träger (I) aus dem thermoplastischen Material zugewandt ist, mit einer lichtundurchlässigen Schicht, beispielsweise einem Lack, überzogen, beispielsweise bedruckt wird, wobei diese lichtundurchlässige Schicht mindestens eine Aussparung (bevorzugt in Formen wie oben beschrieben) aufweist. In dieser ersten speziellen Ausführungsform wird bei der Herstellung des erfindungsgemäßen Mehrschichtkörpers die so hergestellte Schicht (II) auf der mit der lichtundurchlässigen Schicht versehenen Seite mit der thermoplastischen Formmasse hinterspritzt, so dass das Erscheinungsbild des Steinprodukts, Tierhautprodukts, Textilgewebes enthaltend synthetische Fasern, Materials pflanzlichen Ursprungs oder enthaltend Bestandteile pflanzlichen Ursprungs oder Laminats enthaltend eines oder mehrere der genannten Materialien auf der Sichtseite des Mehrschichtkörpers erhalten bleibt.

Ausgehend von der Sichtseite enthält der Mehrschichtkörper in dieser erstenspeziellen Ausführungsform also in dieser Reihenfolge die dekorative Schicht (II), die lichtundurchlässige Schicht (beispielsweise einen Lack) mit mindestens einer Aussparung und die Trägerschicht (I).

In einer zweiten speziellen Ausführungsform wird zunächst die dekorative Schicht (II) (die bei mindestens einer Wellenlänge im Wellenlängenbereich des Spektrums von 380 bis 780 nm einen Transmissionsgrad von mindestens 25%, weiter bevorzugt mindestens 40 % und am meisten bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird) ) mit dem Trägermaterial unter Ausbildung der Trägerschicht (I) hinterspritzt und anschließend die Trägerschicht (I) auf der der dekorativen Schicht (II) abgewandten Seite mit einer lichtundurchlässigen Schicht, beispielsweise einem Lack, überzogen, beispielsweise bedruckt, wobei diese lichtundurchlässige Schicht mindestens eine Aussparung aufweist.

Ausgehend von der Sichtseite enthält der Mehrschichtkörper in dieser zweitenspeziellen Ausführungsform also in dieser Reihenfolge die dekorative Schicht (II), die Trägerschicht (I) und die lichtundurchlässige Schicht (beispielsweise einen Lack) mit mindestens einer Aussparung.

Die Schicht (II) kann auf der der Trägerschicht abgewandten Seite, also der Sichtseite, mit einem Beschichtungsmittel beschichtet sein. Eine Beschichtung soll üblicherweise einen mechanischen Schutz gegen Abrieb und Verkratzung und/oder einen Schutz gegen Bewitterungseinflüsse, d.h. Beregnung, Temperatur und UV-Strahlung, bieten. Mit einer Beschichtung kann auch eine bestimmte Oberflächenhaptik oder -optik erreicht werden.

Geeignete Beschichtungen sind beispielsweise thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können.

Ebenso können UV-härtende Beschichtungssysteme, z.B. auf Acrylat-, Urethanacrylat oder Acrylsilanbasis, die gegebenenfalls Füllstoffe zur Verbesserung der Kratzfestigkeit beinhalten, eingesetzt werden.

### Herstellung der Mehrschichtkörper

Die Herstellung der Mehrschichtkörper erfolgt bevorzugt über das Inmould-Dekorationsverfahren (IMD). Das IMD-Verfahren ist ein Sonderverfahren des Spritzgießens, bei dem vor dem Einspritzen der Kunststoffschmelze optional dreidimensional vorgeformte Schichten aus dem Material der dekorativen Schicht (II) als Einleger in das Spritzgießwerkzeug eingelegt werden. Das Verfahren an sich ist dem Fachmann bekannt und wird vielfach angewendet.

Die Einleger sind meist umgeformte Folien, Bahnen oder sonstige Schichten. Für die Umformverfahren kann eine mechanische oder berührungslose Thermoverformung verwendet werden. Hierfür wird beispielsweise das Tiefziehverfahren verwendet. Weitere Verfahren sind Vakuum-Tiefziehen, Pressen oder Blasverformen. Bei engerer Positionstoleranz wird das bekannte High Pressure Forming (HPF) Verfahren verwendet, wie es beispielsweise in EP 2 197 656 B1 beschrieben ist. Die Folien werden in der Regel nach der Verformung beschnitten. Hierfür können die gängigen Verfahren wie Stanzen, Fräsen, Klingenschnitt, Laserstrahlschneiden und Wasserstrahlschneiden eingesetzt werden.

Vereinfacht ausgedrückt werden zur Herstellung der erfindungsgemäßen Mehrschichtkörper im bevorzugten Verfahren also die folgenden Schritte durchgeführt:
a) Herstellung einer Schicht aus einem Material ausgewählt aus der Gruppe bestehend aus Stein, Tierhautprodukt Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,
   wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 %, bevorzugt von mindestens 40 % und am meisten bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird
      oder
   wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II) mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind,
b) optional Thermoformen der in Schritt a) hergestellten Schicht,
c) Hinterspritzen der Schicht mit einer wie oben beschriebenen thermoplastischen Formmasse.

Es ist auch möglich, dass die dreidimensionale Verformung der Schicht und das Hinterspritzen in einem einzigen Spritzgießwerkzeug erfolgt. Ein solches vereinfachtes Verfahren ist beispielsweise in WO 2014/044694 A1 offenbart.

Es ist auch möglich, dass nach dem Hinterspritzen der dekorativen Schicht (II) mit dem Trägermaterial eine weitere Schicht eines thermoplastischen Materials, bevorzugt eines transparenten Materials, in einem Umspritzprozess aufgetragen wird, so dass sich diese weitere Schicht nahtlos um die Oberfläche des nach dem Hinterspritzen erhaltenen Bauteils legt. Das Verfahren des Umspritzens ist dem Fachmann bekannt und ist beispielsweise in den Druckschriften WO 2012/069590 A1, EP2402140 A1 und DE 102007011338 A1 beschrieben. Die Trägerschicht (I) weist bevorzugt eine Dicke von 0,5 bis 5 mm, besonders bevorzugt von 1,5 bis 3,5 mm, besonders bevorzugt von 1,7 bis 3,0 mm auf. Diese Angabe ist so zu verstehen, dass die Trägerschicht (I) eine Dicke in diesen Bereichen an jeder Stelle ihrer Ausdehnung aufweist, wobei in den zu durchleuchtenden Bereichen bevorzugt Trägerschichtdicken von maximal 3,0 mm, weiter bevorzugt maximal 2,5 mm, besonders bevorzugt maximal 2,2 mm zum Einsatz kommen. Dabei weist die Schicht, nicht zwingend über die gesamte Fläche dieselbe Dicke auf, sondern kann auch unterschiedliche Dicken aufweisen, beispielsweise durch Ausbildung von Verstärkungsrippen, aufgrund der Bauteilform, aufgrund von Befestigungsstrukturen etc.

Nachfolgend werden weitere Ausführungsformen vorliegenden Erfindung beschrieben:
1. Mehrschichtkörper,
   umfassend
   (I) eine Trägerschicht aus einer thermoplastischen Formmasse enthaltend
      A) mindestens einen Vertreter ausgewählt aus der Gruppe bestehend aus aromatischem Polycarbonat und aromatischem Polyestercarbonat,
      B) kautschukmodifiziertes Vinyl(co)polymerisat aus
         B.1) 80 bis 95 Gew.-%, bezogen auf das kautschukmodifizierte Vinyl(co)polymerisat B, Struktureinheiten abgeleitet von wenigstens einem Vinylmonomeren und
         B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, ermittelt durch dynamische Differenzkalorimetrie nach DIN EN 61006 in der Version von 1994 bei einer Heizrate von 10 K/min mit Bestimmung der Glasübergangstemperatur als Mittelpunkttemperatur, enthaltend mindestens 50 Gew.-%, bezogen auf B.2, an vom 1,3-Butadien abgeleiteten Struktureinheiten,
            wobei das kautschukmodifizierte Vinyl(co)polymerisat B
            (i) eine disperse Phase bestehend aus
               (i.1) mit Vinyl(co)polymerisat aus Struktureinheiten gemäß B.1 gepfropften Kautschukpartikeln und
               (i.2) in den Kautschukpartikeln als separierte disperse Phase eingeschlossenes Vinyl(co)polymerisat ebenfalls aus Struktureinheiten gemäß B.1
               und
            (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
            enthält,
         wobei die disperse Phase gemäß (i) einen mittleren Durchmesser D50 gemessen per Ultrazentrifugation von 0,7 bis 2,0 µm aufweist,
      C) optional mindestens eine weitere Komponente ausgewählt aus Polymeradditiven und polymeren Blendpartnern,

      wobei die thermoplastische Formmasse weniger als 2 Gew.-% an von Komponente B) verschiedenen, kautschukbasierten Pfropfpolymeren enthält und
      wobei die thermoplastische Formmasse einen Kautschukgehalt von mindestens 1,5 Gew.-% aufweist,
      und
   (II) eine Schicht aus einem Material ausgewählt aus der Gruppe bestehend aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,

   wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 % aufweist, wobei der Transmissionsgrad aus dem Transmissionsspektrum ermittelt wird, welches gemäß der Vorgaben in der DIN/ISO 13468-2 in der Version von 2006 gemessen wird
      oder
   wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II) -mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind.
2. Mehrschichtkörper gemäß Ausführungsform 1, wobei es sich bei dem Material pflanzlichen Ursprungs um ein Naturholz, Holzfurnier, Kork, Papier, Celluloseprodukt oder Textilgewebe aus Naturfasern handelt.
3. Mehrschichtkörper gemäß Ausführungsform 1 oder 2, wobei das Tierhautprodukt ein Leder ist.
4. Mehrschichtkörper gemäß einer der vorhergehenden Ausführungsformen, wobei Schicht (II) ein Naturholz oder ein Laminat enthaltend ein Naturholz umfasst.
5. Mehrschichtkörper gemäß einer der vorhergehenden Ausführungsformen, wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 40%, bevorzugt von mindestens 50 % aufweist, wobei der Transmissionsgrad aus dem Transmissionsspektrum ermittelt wird, welches gemäß der Vorgaben in der DIN/ISO 13468-2 in der Version von 2006 gemessen wird..
6. Mehrschichtkörper gemäß einer der vorhergehenden Ausführungsformen, wobei die Dicke der Trägerschicht im Bereich von 0,5 bis 5 mm liegt.
7. Mehrschichtkörper gemäß einer der vorhergehenden Ausführungsformen, wobei die Trägerschicht
   30 bis 85 Gew.-%, der Komponente A,
   14 bis 69 Gew.-% der Komponente B,
   und 0,05 bis 20 Gew.-% der Komponente C
   enthält.
8. Mehrschichtkörper gemäß einer der vorhergehenden Ausführungsformen, wobei die Trägerschicht 50 bis 82 Gew.-%, der Komponente A, 17 bis 49 Gew.-% der Komponente B und 0,1 bis 10 Gew.-% der Komponente C enthält.
9. Mehrschichtkörper gemäß einer der vorhergehenden Ausführungsformen, wobei die Trägerschicht 58 bis 82 Gew.-%, der Komponente A, 17 bis 41 Gew.-% der Komponente B und 0,2 bis 5 Gew.-% der Komponente C enthält.
10. Mehrschichtkörper gemäß einer der vorhergehenden Ausführungsformen, wobei die Trägerschicht 65 bis 75 Gew.-%, der Komponente A, 24 bis 34 Gew.-% der Komponente B und 0,3 bis 2 Gew.-% der Komponente C enthält.
11. Mehrschichtkörper gemäß einer der vorhergehenden Ausführungsformen, wobei die Trägerschicht weniger als 1 Gew.-% an von Komponente B) verschiedenen, kautschukbasierten Pfropfpolymeren enthält.
12. Mehrschichtkörper gemäß einer der vorhergehenden Ausführungsformen, wobei die Trägerschicht weniger als 0,5 Gew.-% an von Komponente B) verschiedenen, kautschukbasierten Pfropfpolymeren enthält.
13. Mehrschichtkörper gemäß einer der vorhergehenden Ausführungsformen, wobei die Trägerschicht keinerlei von Komponente B) verschiedene, kautschukbasierte Pfropfpolymeren enthält.
14. Mehrschichtkörper gemäß einer der vorhergehenden Ausführungsformen, wobei die Trägerschicht einen Kautschukgehalt im Bereich von 1,5 bis 6 Gew.-% aufweist.
15. Mehrschichtkörper gemäß einer der vorhergehenden Ausführungsformen, wobei die Trägerschicht einen Kautschukgehalt im Bereich von 1,8 bis 5 Gew.-% aufweist.
16. Mehrschichtkörper gemäß einer der vorhergehenden Ausführungsformen, wobei die Trägerschicht einen Kautschukgehalt von 1,9 bis 4,1 Gew.-% aufweist.
17. Mehrschichtkörper gemäß einer der vorhergehenden Ausführungsformen, wobei die Trägerschicht einen Kautschukgehalt im Bereich von 2,5 bis 3,5 Gew.-% aufweist.
18. Mehrschichtkörper gemäß einer der vorhergehenden Ausführungsformen, wobei die Komponente A der Trägerschicht ein aromatisches Polycarbonat ausschließlich basierend auf Bisphenol A ist.
19. Mehrschichtkörper gemäß einer der vorhergehenden Ausführungsformen, wobei die Komponente B der Trägerschicht durch ein Massepolymerisationsverfahren hergestellt wird.
20. Mehrschichtkörper gemäß einer der vorhergehenden Ausführungsformen, wobei die Komponente B) weniger als in Summe 20 ppm Ionen von Alkalimetallen und Erdalkalimetallen enthält.
21. Mehrschichtkörper gemäß einer der vorhergehenden Ausführungsformen, wobei die Trägerschicht aus den Komponenten A, B und C besteht.
22. Verwendung einer thermoplastischen Formmasse enthaltend
   A) mindestens einen Vertreter ausgewählt aus der Gruppe bestehend aus aromatischem Polycarbonat und aromatischem Polyestercarbonat,
   B) kautschukmodifiziertes Vinyl(co)polymerisat aus
      B.1) 80 bis 95 Gew.-%, bezogen auf das kautschukmodifizierte Vinyl(co)polymerisat B, Struktureinheiten abgeleitet von wenigstens einem Vinylmonomeren und
      B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, ermittelt durch dynamische Differenzkalorimetrie nach DIN EN 61006 in der Version von 1994 bei einer Heizrate von 10 K/min mit Bestimmung der Glasübergangstemperatur als Mittelpunkttemperatur, enthaltend mindestens 50 Gew.-%, bezogen auf B.2, an vom 1,3-Butadien abgeleiteten Struktureinheiten,
         wobei das kautschukmodifizierte Vinyl(co)polymerisat B
         (i) eine disperse Phase bestehend aus
            (i.1) mit Vinyl(co)polymerisat aus Struktureinheiten gemäß B.1 gepfropften Kautschukpartikeln
               und
            (i.2) in den Kautschukpartikeln als separierte disperse Phase eingeschlossenes Vinyl(co)polymerisat ebenfalls aus Struktureinheiten gemäß B.1
            und
         (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
            enthält,
         wobei die disperse Phase gemäß (i) einen mittleren Durchmesser D50 gemessen per Ultrazentrifugation von 0,7 bis 2,0 µm aufweist,
   C) optional mindestens eine weitere Komponente ausgewählt aus Polymeradditiven und polymeren Blendpartnern,

   wobei die thermoplastische Formmasse weniger als 2 Gew.-%, an von Komponente B) verschiedenen, kautschukbasierten Pfropfpolymeren enthält und wobei die thermoplastische Formmasse einen Kautschukgehalt von mindestens 1,5 Gew.-% aufweist,
   als Trägerschicht in einem Mehrschichtkörper,
   wobei der Mehrschichtkörper folgende Komponenten umfasst:
      (I) die Trägerschicht,
      (II) eine Schicht aus einem Material ausgewählt aus der Gruppe bestehend aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,

      wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 % aufweist, wobei der Transmissionsgrad aus dem Transmissionsspektrum ermittelt wird, welches gemäß der Vorgaben in der DIN/ISO 13468-2 in der Version von 2006 gemessen wird
         oder
      wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II)-mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind,
23. Verfahren zur Herstellung eines Mehrschichtkörpers,
   umfassend die Schritte
   a) Herstellung einer Schicht (II) aus einem Material ausgewählt aus der Gruppe bestehend aus Stein, Tierhautprodukt Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,
      wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 % aufweist, wobei der Transmissionsgrad aus dem Transmissionsspektrum ermittelt wird, welches gemäß der Vorgaben in der DIN/ISO 13468-2 in der Version von 2006 gemessen wird
         oder
      wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II) mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind,
   b) optional Thermoformen der in Schritt a) hergestellten Schicht,
   c) Hinterspritzen der Schicht mit einer thermoplastischen Formmasse enthaltend
      A) mindestens einen Vertreter ausgewählt aus der Gruppe bestehend aus aromatischem Polycarbonat und aromatischem Polyestercarbonat ,
      B) kautschukmodifiziertes Vinyl(co)polymerisat aus
         B.1) 80 bis 95 Gew.-%, bezogen auf das kautschukmodifizierte Vinyl(co)polymerisat B, Struktureinheiten abgeleitet von wenigstens einem Vinylmonomeren und
         B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, ermittelt durch dynamische Differenzkalorimetrie nach DIN EN 61006 in der Version von 1994 bei einer Heizrate von 10 K/min mit Bestimmung der Glasübergangstemperatur als Mittelpunkttemperatur, enthaltend mindestens 50 Gew.-%, bezogen auf B.2, an vom 1,3-Butadien abgeleiteten Struktureinheiten,
            wobei das kautschukmodifizierte Vinyl(co)polymerisat B
            (i) eine disperse Phase bestehend aus
               (i.1) mit Vinyl(co)polymerisat aus Struktureinheiten gemäß B.1 gepfropften Kautschukpartikeln
                  und
               (i.2) in den Kautschukpartikeln als separierte disperse Phase eingeschlossenes Vinyl(co)polymerisat ebenfalls aus Struktureinheiten gemäß B.1
               und
            (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
         enthält, wobei die disperse Phase gemäß (i) einen mittleren Durchmesser D50 gemessen per Ultrazentrifugation von 0,7 bis 2,0 µm aufweist,
      C) optional mindestens eine weitere Komponente ausgewählt aus Polymeradditiven und polymeren Blendpartnern.
         wobei die thermoplastische Formmasse weniger als 2 Gew.-%, an von Komponente B) verschiedenen, kautschukbasierten Pfropfpolymeren enthält und
         wobei die thermoplastische Formmasse einen Kautschukgehalt von mindestens 1,5 Gew.-% aufweist.
24. Beleuchtungs- oder Anzeigeeinheit, umfassend
   a) einen Mehrschichtkörper gemäß einem der Ausführungsformen 1 bis 21
   b) eine Lichtquelle, welche Licht mit mindestens einer Wellenlänge im Wellenlängenbereich des Spektrums von 380 bis 780 nm ausstrahlt,
   wobei die Lichtquelle b) so angeordnet ist, dass die Trägerschicht (I) des Mehrschichtkörpers a) von dem von der Lichtquelle b) abgestrahlten Licht durchstrahlt wird.
25. Beleuchtungs- oder Anzeigeeinheit gemäß Ausführungsform 24, wobei es sich bei der Lichtquelle b) um eine LED-Lichtquelle handelt.

### Beispiele

### Komponente A-1:

Lineares Polycarbonat auf Basis Bisphenol-A mit einem gewichtsgemittelten Molekulargewicht M_{W} von 24.000 g/mol (bestimmt durch GPC bei Raumtemperatur in Methylenchlorid gegen einen BPA-PC-Standard).

### Komponente A-2:

Lineares Polycarbonat auf Basis Bisphenol-A mit einem gewichtsgemittelten Molekulargewicht M_{W} von 28.000 g/mol (bestimmt durch GPC bei Raumtemperatur in Methylenchlorid gegen einen BPA-PC-Standard).

### Komponente B-1:

Acrylnitril(A)-Butadien(B)-Styrol(S)-Polymer, hergestellt im Masse-Polymerisationsverfahren, welches eine disperse Phase aus mit Styrol-Acrylnitril-Copolymerisat gepfropften Kautschukpartikeln basierend auf einem Polybutadienkautschuk als Pfropfgrundlage enthaltend als separierte disperse Phase eingeschlossenes Styrol-Acrylnitril-Copolymerisat sowie eine nicht chemisch an die Kautschukpartikel gebundene und nicht in den Kautschukpartikeln eingeschlossene Styrol-Acrylnitril-Copolymerisat-Matrix enthält. Komponente B-1 weist ein A:B:S-Verhältnis von 23:10:67 Gew.-% und einen Gelgehalt, bestimmt als in Aceton unlöslicher Anteil, von 20 Gew.-% auf. Der in Aceton lösliche Anteil der Komponente B-1 weist ein gewichtsgemitteltes Molekulargewicht M_{w} (gemessen per GPC in Tetrahydrofuran als Lösungsmittel mit Polystyrol als Standard) von 165 kg/mol auf. Die mittlere Partikelgröße der dispersen Phase D50, gemessen per Ultrazentrifugation, beträgt 0,85 µm. Die Schmelzeflussrate (MVR) der Komponente B-1, gemessen nach ISO 1133 (Version von 2012) bei 220°C mit einer Stempellast von 10 kg, beträgt 6,7 ml/10 min.

### Komponente B-2:

Acrylnitril(A)-Butadien(B)-Styrol(S)-n-Butylacrylat(BA)-Polymer, hergestellt im Masse-Polymerisationsverfahren, welches eine disperse Phase aus mit Styrol-Acrylnitril-n-Butylacrylat-Terpolymerisat gepfropften Kautschukpartikeln basierend auf einem Polybutadienkautschuk als Pfropfgrundlage enthaltend als separierte disperse Phase eingeschlossenes Styrol-Acrylnitril-n-Butylacrylat Terpolymerisat sowie eine nicht chemisch an die Kautschukpartikel gebundene und nicht in den Kautschukpartikeln eingeschlossene Styrol-Acrylnitril-Copolymerisat-Matrix enthält. Komponente B-2 weist ein A:B:S:BA-Verhältnis von 22,5:10:63:4,5 Gew.-% und einen Gelgehalt, bestimmt als in Aceton unlöslicher Anteil, von 19 Gew.-% auf. Der in Aceton lösliche Anteil der Komponente B-2 weist ein gewichtsgemitteltes Molekulargewicht M_{w} (gemessen per GPC in Tetrahydrofuran als Lösungsmittel mit Polystyrol als Standard) von 115 kg/mol auf. Die mittlere Partikelgröße der dispersen Phase D50, gemessen per Ultrazentrifugation, beträgt 0,50 µm. Die Schmelzeflussrate (MFR) der Komponente C-1, gemessen nach ISO 1133 (Version von 2012) bei 220°C mit einer Stempellast von 10 kg, beträgt 28 g/10 min.

### Komponente B-3

Acrylnitril-Butadien-Styrol-Pfropfpolymerisat mit Kern-Schale-Struktur, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks als Pfropfgrundlage. Diese Polybutadienkautschuk-Pfropfgrundlage weist eine bimodale Teilchengrößenverteilung mit Maxima bei 0,28 µm und 0,40 µm und eine mittlere Partikelgröße D50, gemessen per Ultrazentrifugation, von 0,35 µm auf.

Die Komponente B-3 enthält kein in den Kautschukpartikeln eingeschlossenes Styrol-Acrylnitril-Copolymerisat.

### Komponente B-4

Acrylnitril-Butadien-Styrol-Pfropfpolymerisat mit Kern-Schale-Struktur, hergestellt durch Emulsions-Polymerisation von 42 Gew.-% bezogen auf das ABS-Polymerisat einer Mischung aus 26 Gew.-% Acrylnitril und 74 Gew.-% Styrol in Gegenwart von 58 Gew.-% bezogen auf das ABS-Polymerisat eines agglomerierten partikulären Polybutadienkautschuks als Pfropfgrundlage. Diese Polybutadienkautschuk-Pfropfgrundlage weist eine im Vergleich zu der in Komponente B-3 verwendeten Pfropfgrundlage deutlich breitere und monomodale Teilchengrößenverteilung auf. Die mittlere Partikelgröße D50, gemessen per Ultrazentrifugation, liegt jedoch im ähnlichen Bereich wie bei der Komponente B-3 bei 0,38 µm.

Die Komponente B-4 enthält kein in den Kautschukpartikeln eingeschlossenes Styrol-Acrylnitril-Copolymerisat.

### Komponente B-5

Styrol-Acrylnitril-Copolymer, hergestellt im Masse-Polymerisationsverfahren, mit einem Acrylnitrilgehalt von 23 Gew.-% und mit einem gewichtsgemitteltem Molekulargewicht M_{w} von 100.000 Da gemessen per GPC bei Raumtemperatur in Tetrahydrofuran mit Polystyrol als Standard.

### Komponente C1:

Pentaerythrittetrastearat

### Komponente C-2:

Irganox^{™} B900 (BASF, Ludwigshafen, Deutschland)
Mischung aus 80 Gew.-% Tris(2,4-di-tert.-butyl-phenyl)-phospit (Irgafos^{™} 168)und 20
Gew.-% 2,6-Di-tert.-butyl-4-(octadecanoxycarbonylethyl)phenol (Irganox^{™} 1076)

### Komponente C3:

Irganox^{™} 1076 (BASF, Ludwigshafen, Deutschland)
2,6-Di-tert.-butyl-4-(octadecanoxycarbonylethyl)phenol

### Herstellung und Prüfung der erfindungsgemäßen Formmassen

Die Herstellung der Formmassen erfolgte auf einem Zweiwellenextruder ZSK25 der Fa. Coperion, Werner & Pfleiderer (Stuttgart, Deutschland) bei einer Massetemperatur von 260°C und unter Anlegen eines Unterdrucks von 100 mbar (absolut).

Die Prüfkörper wurden bei einer Massetemperatur von 260°C und bei einer Werkzeugtemperatur von 80°C auf einer Spritzgießmaschine Typ Arburg 270 E hergestellt.

Die Schmelzeviskosität wurde bestimmt bei einer Temperatur von 260°C und einer Scherrate von 1000 s⁻¹ gemäß ISO 11443 (Version von 2014).

Die IZOD-Kerbschlagzähigkeit wurde bestimmt bei Temperaturen im Bereich von -50°C bis 23°C an Prüfstäben der Dimension von 80 mm x 10 mm x 4 mm gemäß ISO 180/1A (Version von 2013). Aus den Messungen bei unterschiedlichen Temperaturen wurde die Zäh-Spröd-Übergangstemperatur als diejenige Temperatur ermittelt, bei der 50% der Prüfkörper in dem Test spröd und 50% zäh brechen.

Zur Beurteilung der Materialduktilität unter multiaxialer Belastung bei tiefen Temperaturen wurde ein Durchstoßversuch gemäß ISO 6603-2 (Version von 2002) bei -20°C an jeweils zehn Prüfkörpern der Dimension von 60 mm x 60 mm x 2 mm durchgeführt. Als Maß für die Materialduktilität unter multiaxialer Belastung dient dabei der prozentualer Anteil der Sprödbrüche. Unter einem Sprödbruch wird dabei ein Bruchversagen verstanden, in denen Teile des Prüfkörpers beim Durchstoßversuch splitternd herausgebrochen werden und/oder die Prüfkörper eine instabile Rissausbreitung zeigen, wodurch der Prüfkörper im Test entlang eines solches Risses komplett in zwei Teile auseinanderbricht.

Der Elastizitätsmodul E und die Bruchdehnung wurde bestimmt an Schulterstäben der Dimension von 170 mm x 10 mm x 4 mm bei 23°C gemäß ISO 527 (Version von 1996) mit einer Dehnrate von 1 mm/min (Elastizitätsmodul) bzw. 5 mm/min (Bruchdehnung).

Als Maß für die Wärmeformbeständigkeit wird die Erweichungstemperatur Vicat B/120 bestimmt an Prüfstäben der Dimension von 80 mm x 10 mm x 4 mm gemäß ISO 180/1A (Version von 2014).

Als Maß für die Durchleuchtbarkeit wurde der Totaltransmissionsgrad gemäß ISO 13468-2 (Version von 2006) (Lichtquelle: D65, Beobachter: 10°) an Prüfkörpern der Dimension von 60 mm x 40 mm x 2 mm (d.h. bei einer Materialdicke von 2 mm) bestimmt.

Als Maß für die Lichtdiffusivität wurde der Halbwertswinkel = Half Power Angle (HPA) der Lichtintensität verwendet. Größere Halbwertswinkel bedeuten dabei stärkere Lichtstreuung. Zur Ermittlung des Halbwertswinkels wird die Intensität des Lichts nach Durchleuchtung eines Prüfkörpers der Dimension von 60 mm x 40 mm x 2 mm (d.h. mit einer Materialdicke von 2 mm) in Abhängigkeit des Polarwinkels gemessen relativ zum Einfalllichtstrahl im Bereich von 0° bis 90° gemessen. Die erhaltenen Werte werden auf den Intensitätswert, welcher bei einem Winkel von 0° gemessen wird, normiert, so dass die normierte Intensität in Abhängigkeit vom Polarwinkel θ zwischen 0 und 1 variiert mit I(0°) =1. Der Halbwertswinkel (HPA) ist dabei als der Winkel definiert, bei dem die normierte Intensität auf 0.5 abgefallen ist, das heißt I(HPA)=0.5. Bei dieser Definition beträgt der theoretisch maximal mögliche Halbwertswinkel 60°.

**Tabelle 1: Zusammensetzungen und ihre Eigenschaften**

| **Komponente** | **1** | **V2** | **V3** | **V4** | **V5** | **V6** | **7** | **8** | **V9** | **10** | **11** | **12** | **V13** |
|---|---|---|---|---|---|---|---|---|---|---|---|---|---|
| A-1 | 80 | 80 | 80 | 80 | 80 | 80 | 60 | 70 | 90 | | | | |
| A-2 | | | | | | | | | | 60 | 70 | 80 | 90 |
| B-1 | 20 | | | | | | 40 | 30 | 10 | 40 | 30 | 20 | 10 |
| B-2 | | 20 | | | | | | | | | | | |
| B-3 | | | 5 | 2,5 | | | | | | | | | |
| B-4 | | | | | 5 | 2,5 | | | | | | | |
| B-5 | | | 15 | 17,5 | 15 | 17,5 | | | | | | | |
| C-1 | 0,5 | 0,5 | 0,5 | 0,5 | 0,5 | 0,5 | 0,5 | 0,5 | 0,5 | 0,5 | 0,5 | 0,5 | 0,5 |
| C-2 | 0,1 | 0,1 | 0,1 | 0,1 | 0,1 | 0,1 | 0,1 | 0,1 | 0,1 | 0,1 | 0,1 | 0,1 | 0,1 |
| C-3 | 0,2 | 0,2 | 0,2 | 0,2 | 0,2 | 0,2 | 0,2 | 0,2 | 0,2 | 0,2 | 0,2 | 0,2 | 0,2 |

| **Berechnete Größe** | | | | | | | | | | | | | |
|---|---|---|---|---|---|---|---|---|---|---|---|---|---|
| Kautschuk-Gehalt in der Zusammensetzung [Gew.-%] | 2,0 | 2,0 | 2,8 | 1,4 | 2,9 | 1,4 | 4,0 | 3,0 | 1,0 | 4,0 | 3,0 | 2,0 | 1,0 |

| **Eigenschaften** | | | | | | | | | | | | | |
|---|---|---|---|---|---|---|---|---|---|---|---|---|---|
| Transmission [%] | 52 | 46 | 46 | 51 | 44 | 49 | 47 | 49 | 60 | 46 | 48 | 52 | 58 |
| Halbwertswinkel [°] | 50 | 24 | 3 | 2 | 34 | 2 | 57 | 55 | 2 | 56 | 55 | 50 | 2 |
| Schmelzeviskosität [Pas] | 248 | 200 | 228 | 213 | 228 | 225 | 174 | 202 | 312 | 204 | 230 | 293 | 454 |
| Kerbschlagzähigkeit bei -30°C [kJ/m²] | 21 | 16 | 15 | 10 | 15 | 9 | 20 | 24 | 13 | 43 | 43 | 27 | 13 |
| Zäh-Spröd-Übergangstemperatur [°C] | 0 | 10 | 15 | >23 | 15 | >23 | -15 | -25 | >23 | -45 | -35 | -25 | >23 |
| Durchstoßversuch [% Sprödbruch] | 70 | 100 | 100 | 100 | 70 | 70 | 90 | 50 | 20 | 0 | 0 | 80 | 80 |
| E-Modul | 2325 | 2426 | 2432 | 2529 | 2410 | 2524 | 2289 | 2307 | 2341 | 2273 | 2310 | 2348 | 2356 |
| Reißdehnung | 60 | 101 | 54 | 57 | 59 | 52 | 62 | 59 | 53 | 53 | 85 | 94 | 86 |
| Vicat B120 | 135 | 134 | 135 | 134 | 135 | 134 | 124 | 131 | 138 | 123 | 131 | 136 | 138 |

Die Daten in Tabelle 1 zeigen, dass die erfindungsgemäßen Formmassen, welche als Komponente B die erfindungsgemäße Komponente B-1 enthalten und sich hinsichtlich des Polybutadienkautschuk-Gehaltes im erfindungsgemäßen Bereich befinden, eine überraschende vorteilhafte Kombination aus hoher Lichttransmission und hoher Lichtdiffusivität (Streukraft) aufweisen. Weiterhin zeigen die erfindungsgemäßen Formmassen eine vorteilhafte Kombination aus verbesserter Schmelzefließfähigkeit (reduzierter Schmelzeviskosität) und guten mechanischen Eigenschaften, insbesondere auch eine gute Materialzähigkeit selbst bei tiefen Temperaturen. Die nicht erfindungsgemäßen Formmassen, die als Komponente B die nicht erfindungsgemäßen Emulsions-ABS-Komponenten B-3 oder B-4 oder eine nicht erfindungsgemäße Masse-ABS-Komponente B-2 enthalten, erfüllen diese technische Aufgabe der Erfindung dagegen nicht. Gleiches gilt für die Formmassen aus den Zusammensetzungen V9 und V13, welche hinsichtlich ihres Gehalts an Polybutadienkautschuk außerhalb des erfindungsgemäßen Bereiches liegen.

### Herstellung und Beurteilung von Mehrschichtkörpern

### Mehrschichtkörper 1 (Vergleich)

Zur Herstellung des Trägers (I) wurde ein Makrolon^{®} Ai-Typ der Firma Covestro Deutschland AG (Leverkusen, Deutschland) verwendet. Es handelt sich dabei um ein aromatisches Polycarbonat auf Basis von Bisphenol A mit einem MVR von 19 cm³/(10 min), bestimmt bei 300 °C und 1,2 kg Stempellast gemäß DIN ISO 1133:2012-03, enthaltend UV-Absorber und Entformungsmittel. Vor dem Spritzguss wurde das Makrolon^{®} für 4 Stunden bei 120 °C in Trockenluft getrocknet.

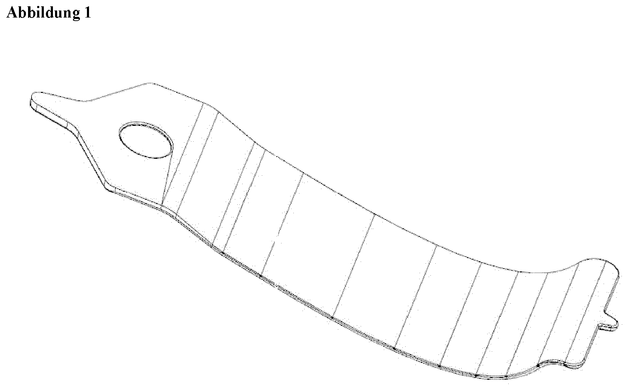

Als Dekorationsschicht (II) kamen Holzfurniere der Firma Microwood^{®} (Liedekerke, Belgien) mit einer Dicke von etwa 0,1 mm zum Einsatz, die vorab auf die Form des Mehrschichtkörpers gemäß Abbildung 1 zugeschnitten und zusätzlich mit 3 Löchern an den Enden des Teils versehen wurden, um die Furniere im Spritzgusswerkzeug auf Haltepinnen aufstecken und fixieren zu können. Der Mehrschichtkörper weist die Maße 400 mm x 120 mm x 4 mm auf. Der kreisförmige Bereich im linken Teil des Mehrschichtkörpers gemäß Abbildung 1 ist der Angussbereich der im Spritzguss hergestellten Trägerschicht (I). Es kam ein Punktanguss mit Heißkanal zum Einsatz.

Auf einer Spritzgießmaschine vom Typ KM GX400 der Firma KraussMaffei Group GmbH (München, Deutschland) wurden dann die zweischichtigen, Mehrschichtkörper aus Holzfurnier als dekorative Schicht (II) und einem Träger (I) aus dem zuvor genannten Makrolon^{®} hergestellt.

Dazu wurde in einem ersten Schritt jeweils ein Holzfurnier auf die Haltepinne in der ersten Werkzeughälfte eines Stahlwerkzeugs aufgesteckt. Nach dem Schließen des Werkzeugs wurde das bei 300 °C aufgeschmolzene transparente Makrolon^{®} mit einem maximalen spezifischen Einspritzdruck von ca. 1500 bar in das Werkzeug auf das Holzfurnier eingespritzt. Die Temperatur der Werkzeugwand lag sowohl auf der Auswerferseite als auch auf der gegenüberliegenden Einspritzseite bei 90 °C. Die Einspritzzeit betrug 4 Sekunden. Nach einer Nachdruckzeit von 15 Sekunden (spezifischer Nachdruck: 700 bar) und einer Kühlzeit von 40 Sekunden wurde das Werkzeug geöffnet und das Formteil entnommen. Die genannten Spritzgussbedingungen wurden dahingehend optimiert, dass das Werkzeug im Spritzguss vollständig gefüllt werden konnte und ein bestmögliches Erscheinungsbild des hergestellten Mehrschichtkörpers resultierte.

### Mehrschichtkörper 2 (Erfindungsgemäßes Beispiel)

Zur Herstellung des Trägers (I) wurde die Formmasse gemäß der Zusammensetzung des Beispiels 11 in Tabelle 1 gewählt. Vor dem Spritzguss wurde das Granulat der erfindungsgemäßen PC/ABS-Formmasse für 4 Stunden bei 105 °C in Trockenluft getrocknet.

In Abweichung zum Vergleichsbeispiel (Herstellung des Mehrschichtkörpers 1) wurde nach dem Schließen des Werkzeugs die bei 270 °C aufgeschmolzene PC/ABS-Formmasse mit einem maximalen spezifischen Einspritzdruck von ca. 1350 bar in das Werkzeug auf das Holzfurnier eingespritzt. Die Temperatur der Werkzeugwand lag sowohl auf der Auswerferseite als auch auf der gegenüberliegenden Einspritzseite bei 80 °C. Die Einspritzzeit betrug erneut 4 Sekunden. Nach einer Nachdruckzeit von 15 Sekunden (spezifischer Nachdruck: 600 bar) und einer Kühlzeit von 40 Sekunden wurde das Werkzeug geöffnet und das Formteil entnommen. Die genannten Spritzgussbedingungen wurden auch in diesem Beispiel dahingehend optimiert, dass das Werkzeug im Spritzguss vollständig gefüllt werden konnte und ein obestmögliches Erscheinungsbild des hergestellten Mehrschichtkörpers resultierte.

Das Holzfurnier des Mehrschichtkörper 1 (Vergleichsbeispiel) zeigte im Bereich des Punktangusses eine blasenförmige Ablösung (Radius ca. 1 cm) vom Trägermaterial bedingt durch eine durch die lokal erhöhte thermische Last bedingte Verformung des Holzfurniers. Beim Mehrschichtkörper 2 (erfindungsgemäßes Beispiel) trat dieser unerwünschte Effekt nicht auf.

Beide Mehrschichtkörper 1 und 2 erwiesen sich mit einer Smartphone-LED als diffus mit hoher Lichtausbeute durchleuchtbar. Während beim erfindungsgemäßen Mehrschichtkörper 2 allerdings ein homogenes, gleichmäßig diffuses Durchleuchtungsbild zu beobachten war, zeichnete sich im Mehrschichtkörper 1 (Vergleich) bei Durchleuchtung auf der Sichtseite störend und unerwünscht der Angussbereich ab.

## Patentansprüche

1. Mehrschichtkörper,
umfassend
(I) eine Trägerschicht aus einer thermoplastischen Formmasse enthaltend
A) mindestens einen Vertreter ausgewählt aus der Gruppe bestehend aus aromatischem Polycarbonat und aromatischem Polyestercarbonat,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, ermittelt durch dynamische Differenzkalorimetrie nach DIN EN 61006 in der Version von 1994 bei einer Heizrate von 10 K/min mit Bestimmung der Glasübergangstemperatur als Mittelpunkttemperatur, enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält, wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern,
wobei die thermoplastische Formmasse weniger als 2 Gew.-% an von Komponente B) verschiedenen, kautschukbasierten Pfropfpolymeren enthält und
wobei die thermoplastische Formmasse einen Kautschukgehalt von mindestens 1,5 Gew.-% aufweist,
und
(II) eine Schicht aus einem Material ausgewählt aus der Gruppe bestehend aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,
wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 % aufweist, wobei der Transmissionsgrad aus dem Transmissionsspektrum ermittelt wird, welches gemäß der Vorgaben in der DIN/ISO 13468-2 in der Version von 2006 gemessen wird,
oder
wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II) mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind.

2. Mehrschichtkörper gemäß Anspruch 1, wobei es sich bei dem Material pflanzlichen Ursprungs um ein Naturholz, Kork, Papier, Celluloseprodukt oder Textilgewebe aus Naturfasern handelt.

3. Mehrschichtkörper gemäß Anspruch 1 oder 2, wobei das Tierhautprodukt ein Leder ist.

4. Mehrschichtkörper gemäß einem der vorhergehenden Ansprüche, wobei Schicht (II) ein Naturholz oder ein Laminat enthaltend ein Naturholz umfasst.

5. Mehrschichtkörper gemäß einem der vorhergehenden Ansprüche, wobei die Dicke der Trägerschicht im Bereich von 0,5 bis 5 mm liegt.

6. Mehrschichtkörper gemäß einem der vorhergehenden Ansprüche, wobei die Trägerschicht 30 bis 85 Gew.-%, der Komponente A,
14 bis 69 Gew.-% der Komponente B,
und 0,05 bis 20 Gew.-% der Komponente C
enthält.

7. Mehrschichtkörper gemäß einer der vorhergehenden Ansprüche, wobei die Komponente B) weniger als in Summe 20 ppm Ionen von Alkalimetallen und Erdalkalimetallen enthält.

8. Mehrschichtkörper gemäß einem der vorhergehenden Ansprüche, wobei die Trägerschicht frei von von Komponente B) verschiedenen, kautschukbasierten Pfropfpolymeren ist.

9. Mehrschichtkörper gemäß einem der vorhergehenden Ansprüche, wobei die Trägerschicht einen Kautschukgehalt von 2,5 bis 3,5 Gew.-% aufweist.

10. Mehrschichtkörper gemäß einem der vorhergehenden Ansprüche, wobei die Komponente B) der Trägerschicht durch ein Massepolymerisationsverfahren hergestellt wird.

11. Mehrschichtkörper gemäß einer der vorhergehenden Ansprüche, wobei die Trägerschicht aus den Komponenten A, B und C besteht.

12. Verwendung einer thermoplastischen Formmasse enthaltend
A) mindestens einen Vertreter ausgewählt aus der Gruppe bestehend aus aromatischem Polycarbonat und aromatischem Polyestercarbonat ,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, ermittelt durch dynamische Differenzkalorimetrie nach DIN EN 61006 in der Version von 1994 bei einer Heizrate von 10 K/min mit Bestimmung der Glasübergangstemperatur als Mittelpunkttemperatur, enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln
und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält, wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern
wobei die thermoplastische Formmasse weniger als 2 Gew.-%, an von Komponente B) verschiedenen, kautschukbasierten Pfropfpolymeren enthält und
wobei die thermoplastische Formmasse einen Kautschukgehalt von mindestens 1,5 Gew.-% aufweist,
als Trägerschicht in einem Mehrschichtkörper,
wobei der Mehrschichtkörper folgende Komponenten umfasst:
(I) die Trägerschicht,
(II) eine Schicht aus einem Material ausgewählt aus der Gruppe bestehend aus Steinprodukt, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,
wobei die Schicht (II) mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 % aufweist, wobei der Transmissionsgrad aus dem Transmissionsspektrum ermittelt wird, welches gemäß der Vorgaben in der DIN/ISO 13468-2 in der Version von 2006 gemessen wird
oder
wobei die Schicht (II) im gesamten Wellenlängenbereich des Spektrums von 380 bis 780 nm einen Transmissionsgrad von kleiner als 25% aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II)-mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind.

13. Verfahren zur Herstellung eines Mehrschichtkörpers,
umfassend die Schritte
a) Herstellung einer Schicht aus einem Material ausgewählt aus der Gruppe bestehend aus Stein, Tierhautprodukt, Textilgewebe enthaltend synthetische Fasern, Material pflanzlichen Ursprungs oder enthaltend Bestandteile pflanzlichen Ursprungs oder Laminat enthaltend eines oder mehrere der genannten Materialien,
wobei die Schicht mindestens in Teilbereichen in ihrer tatsächlichen dortigen Dicke bei mindestens einer Wellenlänge im Wellenlängenbereich des Spektrums von 380 bis 780 nm einen Transmissionsgrad von mindestens 25 % aufweist, wobei der Transmissionsgrad aus dem Transmissionsspektrum ermittelt wird, welches gemäß der Vorgaben in der DIN/ISO 13468-2 in der Version von 2006 gemessen wird
oder
wobei die Schicht im gesamten Wellenlängenbereich des Spektrums von 380 bis 780 nm einen Transmissionsgrad von kleiner als 25 % aufweist, wobei der Transmissionsgrad aus dem Transmissionsspektrum ermittelt wird, welches gemäß der Vorgaben in der DIN/ISO 13468-2 in der Version von 2006 gemessen wird, und wobei die Schicht (II)-mindestens eine Aussparung in Form von mindestens einem Symbol, einem Muster, einem Loch, einer Linie oder einem Zeichen aufweist oder es sich um punktförmige Aussparungen handelt, die in Form von mindestens einem Symbol, einem Muster, einem Loch, einer Linie oder einem Zeichen angeordnet sind,
b) optional Thermoformen der in Schritt a) hergestellten Schicht,
c) Hinterspritzen der Schicht mit einer thermoplastischen Formmasse enthaltend
A) mindestens einen Vertreter ausgewählt aus der Gruppe bestehend aus aromatischem Polycarbonat und aromatischem Polyestercarbonat,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, ermittelt durch dynamische Differenzkalorimetrie nach DIN EN 61006 in der Version von 1994 bei einer Heizrate von 10 K/min mit Bestimmung der Glasübergangstemperatur als Mittelpunkttemperatur, enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln
und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern,
wobei die thermoplastische Formmasse weniger als 2 Gew.-%, an von Komponente B) verschiedenen, kautschukbasierten Pfropfpolymeren enthält und
wobei die thermoplastische Formmasse einen Kautschukgehalt von mindestens 1,5 Gew.-% aufweist.

14. Beleuchtungs- oder Anzeigeeinheit, umfassend
a) einen Mehrschichtkörper gemäß einem der Ansprüche 1 bis 11 und
b) eine Lichtquelle, welche Licht mit mindestens einer Wellenlänge im Wellenlängenbereich des Spektrums von 380 bis 780 nm ausstrahlt,
wobei die Lichtquelle b) so angeordnet ist, dass die Trägerschicht (I) des Mehrschichtkörpers a) von dem von der Lichtquelle b) abgestrahlten Licht durchstrahlt wird.

15. Beleuchtungs- oder Anzeigeeinheit gemäß Anspruch 14, wobei es sich bei der Lichtquelle b) um eine LED-Lichtquelle handelt.

## Claims

1. Multilayer article
comprising
(I) a carrier layer composed of a thermoplastic moulding compound containing
A) at least one representative selected from the group consisting of aromatic polycarbonate and aromatic polyester carbonate,
B) rubber-modified vinyl (co)polymer composed of
B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min with determination of the glass transition temperature as a midpoint temperature and containing at least 50% by weight based on B.2 of structural units derived from 1,3-butadiene,
wherein the rubber-modified vinyl (co)polymer B contains
(i) a disperse phase consisting of
(i.1) rubber particles grafted with vinyl (co)polymer composed of structural units of B.1 and
(i.2) vinyl (co)polymer likewise composed of structural units of B.1 enclosed in the rubber particles as a separate disperse phase
and
(ii) a rubber-free vinyl (co)polymer matrix consisting of structural units of B.1 which is not bonded to the rubber particles and is not enclosed in these rubber particles,
wherein the disperse phase of (i) has a median diameter D50 measured by ultracentrifugation of 0.7 to 2.0 µm,
C) optionally at least one further component selected from polymer additives and polymeric blend partners,
wherein the thermoplastic moulding compound contains less than 2% by weight of rubber-based graft polymers distinct from component B) and
wherein the thermoplastic moulding compound has a rubber content of at least 1.5% by weight, and
(II) a layer of a material selected from the group consisting of stone product, animal hide product, textile fabric containing synthetic fibres, material of vegetable origin or containing constituents of vegetable origin or laminate containing one or more of the recited materials, wherein the layer (II) at least in subregions at its actual local thickness at at least one wavelength in the wavelength range of the spectrum from 380 to 780 nm has a transmittance of at least 25%, wherein the transmittance is determined from the transmission spectrum measured according to the specifications in DIN/ISO 13468-2, 2006 version,
or wherein the layer (II) has a transmittance of less than 25% in the entire wavelength range of the spectrum from 380 to 780 nm, wherein the transmittance is determined from the transmission spectrum measured according to the specifications in DIN/ISO 13468-2, 2006 version, and wherein the layer (II) comprises at least one cutout in the shape of at least one symbol, one pattern, one hole, one line or one character or comprises punctate cutouts arranged in the shape of at least one symbol, one pattern, one hole, one line or one character.

2. Multilayer article according to Claim 1, wherein the material of vegetable origin is a natural wood, cork, paper, cellulose product or textile fabric made of natural fibres.

3. Multilayer article according to Claim 1 or 2, wherein the animal hide product is a leather.

4. Multilayer article according to any of the preceding claims, wherein layer (II) comprises a natural wood or a laminate containing a natural wood.

5. Multilayer article according to any of the preceding claims, wherein the thickness of the carrier layer is in the range from 0.5 to 5 mm.

6. Multilayer article according to any of the preceding claims, wherein the carrier layer contains
30% to 85% by weight of component A,
14% to 69% by weight of component B,
and 0.05% to 20% by weight of component C.

7. Multilayer article according to any of the preceding claims, wherein component B) contains less than a sum total of 20 ppm of ions of alkali metals and alkaline earth metals.

8. Multilayer article according to any of the preceding claims, wherein the carrier layer is free from rubber-based graft polymers distinct from component B).

9. Multilayer article according to any of the preceding claims, wherein the carrier layer has a rubber content of 2.5% to 3.5% by weight.

10. Multilayer article according to any of the preceding claims, wherein component B) of the carrier layer is produced by a bulk polymerization process.

11. Multilayer article according to any of the preceding claims, wherein the carrier layer consists of the components A, B and C.

12. Use of a thermoplastic moulding compound containing
A) at least one representative selected from the group consisting of aromatic polycarbonate and aromatic polyester carbonate,
B) rubber-modified vinyl (co)polymer composed of
B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min with determination of the glass transition temperature as a midpoint temperature and containing at least 50% by weight based on B.2 of structural units derived from 1,3-butadiene,
wherein the rubber-modified vinyl (co)polymer B contains
(i) a disperse phase consisting of
(i.1) rubber particles grafted with vinyl (co)polymer composed of structural units of B.1
and
(i.2) vinyl (co)polymer likewise composed of structural units of B.1 enclosed in the rubber particles as a separate disperse phase and
(ii) a rubber-free vinyl (co)polymer matrix consisting of structural units of B.1 which is not bonded to the rubber particles and is not enclosed in these rubber particles,
wherein the disperse phase of (i) has a median diameter D50 measured by ultracentrifugation of 0.7 to 2.0 µm,
C) optionally at least one further component selected from polymer additives and polymeric blend partners
wherein the thermoplastic moulding compound contains less than 2% by weight of rubber-based graft polymers distinct from component B) and
wherein the thermoplastic moulding compound has a rubber content of at least 1.5% by weight,
as a carrier layer in a multilayer article,
wherein the multilayer article comprises the following components:
(I) the carrier layer,
(II) a layer of a material selected from the group consisting of stone product, animal hide product, textile fabric containing synthetic fibres, material of vegetable origin or containing constituents of vegetable origin or laminate containing one or more of the recited materials, wherein the layer (II) at least in subregions at its actual local thickness at at least one wavelength in the wavelength range of the spectrum from 380 to 780 nm has a transmittance of at least 25%, wherein the transmittance is determined from the transmission spectrum measured according to the specifications in DIN/ISO 13468-2, 2006 version,
or
wherein the layer (II) has a transmittance of less than 25% in the entire wavelength range of the spectrum from 380 to 780 nm, wherein the transmittance is determined from the transmission spectrum measured according to the specifications in DIN/ISO 13468-2, 2006 version, and wherein the layer (II) comprises at least one cutout in the shape of at least one symbol, one pattern, one hole, one line or one character or comprises punctate cutouts arranged in the shape of at least one symbol, one pattern, one hole, one line or one character.

13. Process for producing a multilayer article comprising the steps of
a) producing a layer of a material selected from the group consisting of stone, animal hide product, textile fabric containing synthetic fibres, material of vegetable origin or containing constituents of vegetable origin or laminate containing one or more of the recited materials, wherein the layer at least in subregions at its actual local thickness at at least one wavelength in the wavelength range of the spectrum from 380 to 780 nm has a transmittance of at least 25%, wherein the transmittance is determined from the transmission spectrum measured according to the specifications in DIN/ISO 13468-2, 2006 version,
or
wherein the layer has a transmittance of less than 25% in the entire wavelength range of the spectrum from 380 to 780 nm, wherein the transmittance is determined from the transmission spectrum measured according to the specifications in DIN/ISO 13468-2, 2006 version, and wherein the layer (II) comprises at least one cutout in the shape of at least one symbol, one pattern, one hole, one line or one character or comprises punctate cutouts arranged in the shape of at least one symbol, one pattern, one hole, one line or one character,
b) optionally thermoforming the layer produced in step a),
c) subjecting the layer to film-insert moulding with a thermoplastic moulding compound containing
A) at least one representative selected from the group consisting of aromatic polycarbonate and aromatic polyester carbonate,
B) rubber-modified vinyl (co)polymer composed of
B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min with determination of the glass transition temperature as a midpoint temperature and containing at least 50% by weight based on B.2 of structural units derived from 1,3-butadiene,
wherein the rubber-modified vinyl (co)polymer B contains
(i) a disperse phase consisting of
(i.1) rubber particles grafted with vinyl (co)polymer composed of structural units of B.1
and
(i.2) vinyl (co)polymer likewise composed of structural units of B.1 enclosed in the rubber particles as a separate disperse phase and
(ii) a rubber-free vinyl (co)polymer matrix consisting of structural units of B.1 which is not bonded to the rubber particles and is not enclosed in these rubber particles,
wherein the disperse phase of (i) has a median diameter D50 measured by ultracentrifugation of 0.7 to 2.0 µm,
C) optionally at least one further component selected from polymer additives and polymeric blend partners, wherein the thermoplastic moulding compound contains less than 2% by weight of rubber-based graft polymers distinct from component B) and
wherein the thermoplastic moulding compound has a rubber content of at least 1.5% by weight.

14. Lighting or display unit comprising
a) a multilayer article according to any of Claims 1 to 11 and
b) a light source emitting light having at least one wavelength in the wavelength range of the spectrum from 380 to 780 nm,
wherein the light source b) is arranged such that the carrier layer (I) of the multilayer article a) is trans illuminated by the light emitted by the light source b).

15. Lighting or display unit according to Claim 14, wherein the light source b) is an LED light source.

## Revendications

1. Corps multicouche,
comprenant
(I) une couche de support constituée d'une composition de moulage thermoplastique contenant
A) au moins un polymère choisi dans le groupe constitué par un polycarbonate aromatique et un polyester carbonate aromatique,
B) un (co)polymère de vinyle modifié par du caoutchouc, composé de
B.1) 80 à 95 % en poids, par rapport au (co)polymère de vinyle modifié par du caoutchouc B, d'unités structurales dérivées d'au moins un monomère de vinyle, et
B.2) 5 à 20 % en poids, par rapport au (co)polymère de vinyle modifié par du caoutchouc B, d'une ou plusieurs bases de greffage ayant l'élasticité du caoutchouc, avec des températures de transition vitreuse < -50°C, déterminées par calorimétrie différentielle dynamique selon la norme DIN EN 61006 dans sa version de 1994 à une vitesse de chauffage de 10 K/min avec détermination de la température de transition vitreuse en tant que température au point médian, contenant au moins 50 % en poids, par rapport à B.2, d'unités structurales dérivées du 1,3-butadiène,
le (co)polymère de vinyle modifié par du caoutchouc B contenant
(i) une phase dispersée constituée de
(i.1) des particules de caoutchouc greffées avec un (co)polymère de vinyle composé d'unités structurales selon B.1 et
(i.2) un (co)polymère de vinyle également composé d'unités structurales selon B.1, inclus dans les particules de caoutchouc en tant que phase dispersée séparée, et
(ii) une matrice de (co)polymère de vinyle sans caoutchouc, non liée aux particules de caoutchouc et non incluse dans ces particules de caoutchouc, constituée d'unités structurales selon B.1,
la phase dispersée selon (i) présentant un diamètre moyen D50 mesuré par ultracentrifugation de 0,7 à 2,0 µm,
C) éventuellement, au moins un autre composant choisi parmi les additifs polymères et les partenaires de mélange polymères,
la composition de moulage thermoplastique contenant moins de 2 % en poids de polymères greffés à base de caoutchouc différents du composant B) et
la composition de moulage thermoplastique présentant une teneur en caoutchouc d'au moins 1,5 % en poids, et
(II) une couche d'un matériau choisi dans le groupe constitué par les produits en pierre, les produits en peau animale, les tissus textiles contenant des fibres synthétiques, les matériaux d'origine végétale ou contenant des constituants d'origine végétale ou les stratifiés contenant un ou plusieurs des matériaux mentionnés,
la couche (II) présentant, au moins dans des zones partielles dans son épaisseur réelle locale, une transmittance d'au moins 25%, à au moins une longueur d'onde dans la gamme de longueurs d'onde du spectre allant de 380 à 780 nm, la transmittance étant déterminée à partir du spectre de transmittance, mesuré selon les spécifications de la norme DIN/ISO 13468-2 dans sa version de 2006, ou
la couche (II) présentant, dans toute la gamme de longueurs d'onde du spectre de 380 à 780 nm, une transmittance inférieure à 25 %, la transmittance étant déterminée à partir du spectre de transmittance mesuré selon les spécifications de la norme DIN/ISO 13468-2 dans sa version de 2006, et la couche (II) présentant au moins une découpe sous la forme d'au moins un symbole, un motif, un trou, une ligne ou un caractère, ou consistant en des découpes ponctuelles disposées sous la forme d'au moins un symbole, un motif, un trou, une ligne ou un caractère.

2. Corps multicouche selon la revendication 1, dans lequel le matériau d'origine végétale est un bois naturel, du liège, du papier, un produit cellulosique ou un tissu textile composé de fibres naturelles.

3. Corps multicouche selon la revendication 1 ou 2, dans lequel le produit en peau animale est un cuir.

4. Corps multicouche selon l'une quelconque des revendications précédentes, dans lequel la couche (II) comprend un bois naturel ou un stratifié comprenant un bois naturel.

5. Corps multicouche selon l'une quelconque des revendications précédentes, dans lequel l'épaisseur de la couche de support se situe dans une plage de 0,5 à 5 mm.

6. Corps multicouche selon l'une quelconque des revendications précédentes, dans lequel la couche de support contient
30 à 85 % en poids du composant A,
de 14 à 69 % en poids du composant B,
de 0,05 à 20 % en poids du composant C.

7. Corps multicouche selon l'une quelconque des revendications précédentes, dans lequel le composant B) contient moins de 20 ppm d'ions de métaux alcalins et de métaux alcalino-terreux.

8. Corps multicouche selon l'une quelconque des revendications précédentes, dans lequel la couche de support est exempte de polymères greffés à base de caoutchouc différents du composant B).

9. Corps multicouche selon l'une quelconque des revendications précédentes, dans lequel la couche de support présente une teneur en caoutchouc de 2,5 à 3,5 % en poids.

10. Corps multicouche selon l'une quelconque des revendications précédentes, dans lequel le composant B) de la couche de support est produit par un procédé de polymérisation en masse.

11. Corps multicouche selon l'une quelconque des revendications précédentes, dans lequel la couche de support est constituée des composants A, B et C.

12. Utilisation d'une composition de moulage thermoplastique contenant
A) au moins un polymère choisi dans le groupe constitué par un polycarbonate aromatique et un polyester carbonate aromatique,
B) un (co)polymère de vinyle modifié par du caoutchouc, composé de
B.1) 80 à 95 % en poids, par rapport au (co)polymère de vinyle modifié par du caoutchouc B, d'unités structurales dérivées d'au moins un monomère de vinyle, et
B.2) 5 à 20 % en poids, par rapport au (co)polymère de vinyle modifié par du caoutchouc B, d'une ou plusieurs bases de greffage ayant l'élasticité du caoutchouc, avec des températures de transition vitreuse < -50°C, déterminées par calorimétrie différentielle dynamique selon la norme DIN EN 61006 dans sa version de 1994 à une vitesse de chauffage de 10 K/min avec détermination de la température de transition vitreuse en tant que température au point médian, contenant au moins 50 % en poids, par rapport à B.2, d'unités structurales dérivées du 1,3-butadiène,
le (co)polymère de vinyle modifié par du caoutchouc B contenant
(i) une phase dispersée constituée de
(i.1) des particules de caoutchouc greffées avec un (co)polymère de vinyle composé d'unités structurales selon B.1
et
(i.2) un (co)polymère de vinyle également composé d'unités structurales selon B.1, inclus dans les particules de caoutchouc en tant que phase dispersée séparée, et
(ii) une matrice de (co)polymère de vinyle sans caoutchouc, non liée aux particules de caoutchouc et non incluse dans ces particules de caoutchouc, constituée d'unités structurales selon B.1,
la phase dispersée selon (i) présentant un diamètre moyen D50 mesuré par ultracentrifugation de 0,7 à 2,0 µm,
C) éventuellement, au moins un autre composant choisi parmi les additifs polymères et les partenaires de mélange polymères.
la composition de moulage thermoplastique contenant moins de 2 % en poids de polymères greffés à base de caoutchouc différents du composant B) et
la composition de moulage thermoplastique présentant une teneur en caoutchouc d'au moins 1,5 % en poids,
en tant que couche de support dans un corps multicouche, le corps multicouche comprenant les composants suivants :
(I) la couche de suppport,
(II) une couche d'un matériau choisi dans le groupe constitué par les produits en pierre, les produits en peau animale, les tissus textiles contenant des fibres synthétiques, les matériaux d'origine végétale ou contenant des constituants d'origine végétale ou les stratifiés contenant un ou plusieurs des matériaux mentionnés,
la couche (II) présentant, au moins dans des zones partielles dans son épaisseur réelle locale, une transmittance d'au moins 25%, à au moins une longueur d'onde dans la gamme de longueurs d'onde du spectre allant de 380 à 780 nm, la transmittance étant déterminée à partir du spectre de transmittance, mesuré selon les spécifications de la norme DIN/ISO 13468-2 dans sa version de 2006,
ou
la couche (II) présentant, dans toute la gamme de longueurs d'onde du spectre de 380 à 780 nm, une transmittance inférieure à 25 %, la transmittance étant déterminée à partir du spectre de transmittance mesuré selon les spécifications de la norme DIN/ISO 13468-2 dans sa version de 2006, et la couche (II) présentant au moins une découpe sous la forme d'au moins un symbole, un motif, un trou, une ligne ou un caractère, ou consistant en des découpes ponctuelles disposées sous la forme d'au moins un symbole, un motif, un trou, une ligne ou un caractère.

13. Procédé de fabrication d'un corps multicouche, comprenant les étapes suivantes
a) production d'une couche d'un matériau choisi dans le groupe constitué par la pierre, les produits en peau animale, les tissus textiles contenant des fibres synthétiques, les matériaux d'origine végétale ou contenant des constituants d'origine végétale ou les stratifiés contenant un ou plusieurs des matériaux mentionnés,
la couche présentant, au moins dans des zones partielles dans son épaisseur réelle locale, une transmittance d'au moins 25 % à au moins une longueur d'onde dans la gamme de longueurs d'onde du spectre de 380 à 780 nm, la transmittance étant déterminée à partir du spectre de transmittance, mesuré selon les spécifications DIN/ISO 13468-2 dans sa version de 2006
ou
la couche présentant, dans toute la gamme de longueurs d'onde du spectre de 380 à 780 nm, une transmittance inférieure à 25 %, la transmittance étant déterminée à partir du spectre de transmittance mesuré selon les spécifications de la norme DIN/ISO 13468-2 dans sa version de 2006, et la couche (II) présentant au moins une découpe sous la forme d'au moins un symbole, un motif, un trou, une ligne ou un caractère, ou consistant en des découpes ponctuelles disposées sous la forme d'au moins un symbole, un motif, un trou, une ligne ou un caractère,
b) éventuellement thermoformage de la couche produite à l'étape a),
c) surmoulage par injection de la couche avec une composition de moulage thermoplastique contenant
A) au moins un polymère choisi dans le groupe constitué par un polycarbonate aromatique et un polyester carbonate aromatique,
B) un (co)polymère de vinyle modifié par du caoutchouc, composé de
B.1) 80 à 95 % en poids, par rapport au (co)polymère de vinyle modifié par du caoutchouc B, d'unités structurales dérivées d'au moins un monomère de vinyle, et
B.2) 5 à 20 % en poids, par rapport au (co)polymère de vinyle modifié par du caoutchouc B, d'une ou plusieurs bases de greffage ayant l'élasticité du caoutchouc, avec des températures de transition vitreuse < -50°C, déterminées par calorimétrie différentielle dynamique selon la norme DIN EN 61006 dans sa version de 1994 à une vitesse de chauffage de 10 K/min avec détermination de la température de transition vitreuse en tant que température au point médian, contenant au moins 50 % en poids, par rapport à B.2, d'unités structurales dérivées du 1,3-butadiène,
le (co)polymère de vinyle modifié par du caoutchouc B contenant
(i) une phase dispersée constituée de
(i.1) des particules de caoutchouc greffées avec un (co)polymère de vinyle composé d'unités structurales selon B.1 et
(i.2) un (co)polymère de vinyle également composé d'unités structurales selon B.1, inclus dans les particules de caoutchouc en tant que phase dispersée séparée, et
(ii) une matrice de (co)polymère de vinyle sans caoutchouc, non liée aux particules de caoutchouc et non incluse dans ces particules de caoutchouc, constituée d'unités structurales selon B.1,
la phase dispersée selon (i) présentant un diamètre moyen D50 mesuré par ultracentrifugation de 0,7 à 2,0 µm,
C) éventuellement, au moins un autre composant choisi parmi les additifs polymères et les partenaires de mélange polymères,
la composition de moulage thermoplastique contenant moins de 2 % en poids de polymères greffés à base de caoutchouc différents du composant B) et
la composition de moulage thermoplastique présentant une teneur en caoutchouc d'au moins 1,5 % en poids.

14. Unité d'éclairage ou d'affichage, comprenant
a) un corps multicouche selon l'une quelconque des revendications 1 à 11, et
b) une source lumineuse qui émet de la lumière à au moins une longueur d'onde dans la gamme de longueurs d'onde du spectre de 380 à 780 nm,
la source lumineuse b) étant disposée de telle sorte que la couche de support (I) du corps multicouche a) soit traversée par la lumière émise par la source lumineuse b).

15. Unité d'éclairage ou d'affichage selon la revendication 14, dans laquelle la source lumineuse b) est une source lumineuse à LED.
